# NEW EUROPEAN PATENT SPECIFICATION

(11) **EP 0 582 919 B2**
(45) Date of publication and mention of the opposition decision: **15.02.2006**
(45) Mention of the grant of the patent: 21.10.1998
(21) Application number: 93112280.8
(22) Date of filing: 30.07.1993
(51) Int. Cl.: C08L 79/00, C08K 3/10, C08K 5/42, C08L 101/00, H01B 1/12

(54) **Conducting plastics material and a method for its preparation**
Leitendes Kunststoffmaterial und Methode zu seiner Herstellung
Matériau de plastique conducteur et méthode de sa préparation

(30) Priority: 11.08.1992 FI 923580; 11.08.1992 US 927858
(43) Date of publication of application: 16.02.1994
(73) Proprietor: Fortum Oil and Gas Oy, 00048 Fortum (FI); Panipol OY, 06101 Porvoo (FI)
(72) Inventor: Kärnä, Toivo, SF-06400 Porvoo (FI); Laakso, Jukka, SF-00250 Helsinki (FI); Niemi, Timo, SF-40200 Iyväskylä (FI); Ruohonen, Heikki, SF-00270 Helsinki (FI)
(74) Representative: Dr. Weitzel & Partner

(56) References cited:
- EP-A- 0 497 379
- WO-A-90/10297
- WO-A-92/18988
- US-A- 5 006 278

## Description

The invention concerns a method for producing a conducting polymer or plastics material by contacting a polyaniline or a derivative thereof and a protonic acid. The invention also concerns a melt-processable conducting polymer or plastics material, including a polyaniline doped with a protonic acid or a derivative thereof. The invention is also concerning a new additive and its use for:
a) neutralising,
b) plasticising,
c) lowering the percolation threshold of and/or
d) stabilising

the polyaniline or a derivative thereof which have been doped with a protonic acid.

Today, plenty of research dealing with conducting polymers is carried out worldwide. In many applications such as accumulators, sensing elements, switches, light elements, circuit boards, heating elements, electrostatic discharge elimination (ESD) and electromagnetic interference shielding (EMI) these polymers offer an opportunity to replace the metallic conductors and semi-conductors. Advantages of conducting polymers compared to metals are e.g. their lightness, mechanical properties, corrosion resistance and the sheaper synthesis and processing methods.

Patent application EP-497514 discloses polymerization of aniline in the presence of doping agent and an oxidizing agent to give a quinodiiminephenylenediamine type polyaniline. This polyaniline product is soluble in N-methyl-2-pyrrolidone but it is not soluble in commodity solvents and the product is not suited for melt-processing.

Conducting plastics can roughly be divided into two categories: filled conducting plastics wherein to a thermosetting or thermoplastic resin a conducting filler is added, e.g. carbon black or soot, carbon fiber, metal powder, etc., and inherently conducting plastics, which are polymers that have been made conducting by oxidation or reduction (doping).

The conductivity of the filled conducting plastics is dependent on the mutual contacts of the conducting filler particles. Usually about 10-50 wt.% well disperged filler is needed in order to provide composites with good conductance. This kind of conductor composites have problems, anyhow: their mechanical and some chemical properties are impaired decisively with raising filler content and lowering polymer content, their conductivity is difficult to control especially in the semiconductor range, and stabile and homogenous dispersing of their filler in the matrix plastic is difficult.

Inherently (or intrinsically) conducting polymers can be prepared from organic polymers containing long conjugated double bonds or chains formed by double bonds, aromatic rings and/or heterocyclic rings. The stabile π- and π-p-electron systems in double bonds and heteroatoms can be disturbed by adding to the polymer certain doping or blend materials which are electron acceptors or donators. Holes and/or extra electrons are thus formed in the polymer chain making it possible for electric current to move along the conjugated chain.

An advantage of the inherently conducting polymers is the easiness of the variability of their conductivity as a function of the doping conditions, which is especially expressed in case of low conductivities. By filled conducting plastics it is difficult to obtain low conductivities. Examples of inherently conducting polymers are polyacetylene, polyp-phenylene, polypyrrole, polythiophene and polyaniline.

The processing and stability properties of most inherently conducting polymers don't still, anyhow, allow their use in the mentioned applications.

It can be expected that if would be possible to melt process a compounded material comprising of an inherently conducting polymer (which would act as the conductor) and a thermoplastic polymer (which would mainly give to the composite the needed mechanical and the like properties), it would be possible to prepare a conducting plastics material with superior properties compared to the filled conducting plastics composites above.

One technically and economically promising inherently conducting polymer is polyaniline and the derivatives thereof. Aniline polymer is based on the aniline unit the nitrogen atom of which is bonded to the para-carbon in the benzene ring of the following unit. Un substituted polyaniline can exist in different forms including leucoemeraldine, protoemeraldine, emeraldine, nigraniline and toluprotoemeraldine forms.

The so-called emeraldine base form of polyaniline is usually depicted with molecular formula 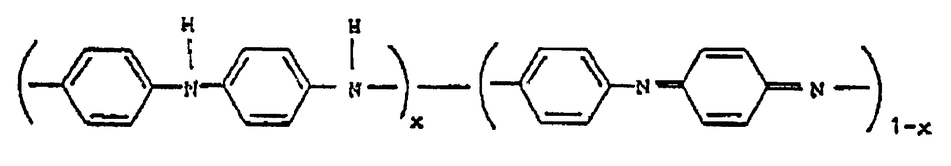
wherein x is about 0.5.

Polyaniline like almost all other inherently conducting polymers has anyhow the problem of poor compliance for processing, i.e., it is difficult to form from the polymers objects, film, fibre and the like which have a desired form.

Polyaniline is well known in the art, and the preparation of the electrically conductive form of this polymer based on, for example, contacting polyanilines with protonic acids has been disclosed. Green, A.G., and Woodhead, A.B., "Anilineblack and Allied Compounds, Part 1 " J. Chem. Soc., Vol. 101, pp. 1117 (1912); Kobayashi, et al., Electrochemical Reactions... of Polyaniline Film-Coated Electrodes, "J. Electro-anl. Chem., Vol. 177, pp. 281-91 (1984); US Patent Nos. 3,963,498, 4,025,463 and 4,983,322; US Patent Application Serial No. 714,165. Typical examples of such disclosed protic acids are HCl, H₂SO₄, sulphonic acids of the type R₁-SO₃H, phosphoric acids, etc. Chiang, J.-C. and MacDiarmid, A.G., "Polyaniline: Protonic Acid Doping of the Emeraldine Form to the Metallic Regime", Synthetic Metals, Vol. 13, p. 196 (1986); Salaneck, W.R. et al., "A Two-Dimensional-Surface "State" Diagram for Polyaniline", Synthetic Metals, Vol. 13, p. 297 (1986). Such acids form complexes with polyaniline, which, generally, exhibit electrical conductivities of 10⁻³ S/cm or more. Thus, the electrical properties make these so-called "doped" polyanilines and their blends and compounds with common insulating bulk polymers suitable for a variety of the antistatic and shielding applications that are currently served by metal or carbon black filled systems.

There are two important processing methods for the processing of the polymers: melt processing and solution processing. The processing difficulties of conducting polymers arise from that by warming the polymer the thermal decomposition begins before melting or plasticising of the polymer. The problem of solution processing of conducting polymers is the poor solubility of inherently conducting polymers to conventional industrial solvents. Another problem is that by solution processing it is indeed possible to form films and fibres from which the solvent can be evaporated, but the solution processing is not suitable for the preparation of the generally used mold pieces.

The best approaches for useful practical solutions in industrial activity are presented by the following Patents US 5,006,278, WO 8901694, WO 9013601, WO 9010297, WO 9001775, and US 5,002,700. Of these patent specifications, the US 5,006,278 is disclosing a conductive product which has been made by mixing together a solvent, a doping agent and a polyaniline, whereafter the solvent has been removed from the mixture. The Patent Specification WO 8901694 presents a processable polyaniline doped with sulphonic acid. The polyaniline of that patent is useful when processing conducting polymers e.g. with the following matrix plastics: PE (polyethylene), PP (polypropylene), PA (polyamide). In patent specification WO 9013601 a polymer mixture is prepared by first mixing in a suitable solvent a mixture of a polyaniline and a doping agent, whereafter the solution is evaporated. The doping agent is an aromatic multisulphonic acid. According to this specification the doping is generally carried out at a temperature of 20-25°C. The doping can be carried out as a heterogenous reaction followed by dissolution of the mixture in a suitable solvent. The processing is carried out while there still is solvent present (p. 15, 1. 23).

A conducting form of a polyaniline has been prepared e.g. by contacting a polyaniline with a protonic acid, cf. for instance US 3,963,498, US 4,025,463, and 4,983,322. The protonic acid forms with the polyaniline complexes the conductivity of which is generally of order about 10⁻³ S/cm or more. Typical protonic acids are for instance HCl,H₂SO₄, HNO₃, HClO₄, HBF₄, HPF₆, HF, phosphoric acids, sulphonic acids, picric acid, n-nitrobenzoic acids, dichloroacetic acid and polymeric acids.

From Patent Specifications WO 9010297, US 5,002,700, and EP 152 632 the use of dodecylbenzenesulphonic acid as a doping agent for polyanilines is known. The Patent Specification WO 9001775 presents as a doping agent for polyaniline a multisulphonic acid with an advantage of better thermal stability compared with other sulphonic acids. In the examples of this WO Patent specification a doping temperature of 20-25°C and atmospheric pressure have been used and the doping has been carried out as a suspension of the polyaniline and the sulphonic acid in an aqueous solution of formic acid.

The earlier publications of the art are discussing very extensively what methods are applicable to the various polyaniline derivatives and also to the solution and melt processing of the polyanilines. The examples of the publications show, however, that only a few solution processing conditions have been found for polyaniline which has been pre-protonated with a suitable doping agent. In all examples of these publications, in order to homogenize the mixture of the polyaniline and the doping agent, the mixture had to be dissolved in a suitable solvent. This has apparently been necessary in order to make the polymeric product adequately homogenous and conducting. In any case, it is evident that in the present art no adequate solutions have been proposed, which are characteristic for the melt processing and verified by examples.

In the art (Plastics Technology 37 (1991):9 p. 19-20, 22) it has indeed been suggested to process polymer blends based on a polyaniline using conventional plastics processing techniques. In practice, the polyaniline, however, appears as small solid particles dispersed in a matrix of a non-conductive polymer, and the processing of this plastics product calls e.g. for the specialized dispersion processing techniques according to Patent Specification Nos. EP 168620 and 168621. Additionally the percolation threshold is quite high. As used hereinafter, the percolation threshold is defined as the weight fraction of conductive compound needed to impart a conductivity of 10⁻⁶ S/cm or more to a blend with an insulating matrix polymer. Thus, in the aforementioned blends of solid polyaniline particles dispersed in poly(vinylchloride) a percolation threshold existed of over about 15% by weight. Such high content of conductive polyaniline particles is not desirable, because it is not economical and, in addition, may substantially alter the mechanical properties of the blend in comparison with those of the pure matrix polymer.

The melt processing also has the problem that the doped polyaniline or the mixture of the polyaniline and the doping agent can be melt processed only once. This makes it impossible to prepare for example in the form of a granulate a homogenous material which can be melt processed. The components of earlier melt processing compositions have thus only been mixed with each other mechanically before their melt processing to a final form. The probes obtained by such methods have had varying conductivities and a non-homogenous quality.

As is clear from the present art, mere mixing together a polyaniline in emeraldine base form and a doping agent (e.g. dodecylbenzenesulphonic acid, DBSA) is not sufficient for providing a homogenous doped polyaniline. A so-called pre-protonated polyaniline/doping agent-mixture is formed from the mixing operation. This liquid mixture or dispersion is indefinite, staining, strongly corrosive, and difficult to handle. In prior publications an adequate mixing which provides for doping of the polyaniline has been realized by dissolving the components of the mixture in the same solvent.

One problem associated with the above discussed doping is also reflected to the preparation of a composite material from a doped polyaniline and a thermoplastic polymer. Thus it has appeared that mixing together a polyaniline and e.g. DBSA which acts as its doping agent with a thermoplastic polymer doesn't result in a homogenous specimen which is suited for melt processing. Test samples made this way had visible defects like different flowing traces, bubbles and cracks. Additionally the surface was acidic. The problem is connected with the poor compatibility of the polyaniline, the doping agent and/or the doped polyaniline with the thermoplastic polymer under melt processing conditions.

As a result of the poor compatibility and processing a relatively high polyaniline content is needed in order to obtain the desirable conductivity level of the plastics mixture or the so-called percolation threshold is high. By "percolation thresholds" is here meant the weight fraction of conducting polymer being in whatsoever form, by which weight fraction the plastic material will reach a conductivity of at least 10⁻⁶ S/cm. Usual percolation thresholds, ie., contents necessary for the above mentioned conductivity are about 15-20 wt.%.

The above mentioned problems with processing and conductivity have partly been solved in the Finnish Patent Application No. 915760, which concerns a process for the preparation of a conducting polyaniline complex and its different polymer blends. According to the process there is formed a blend or a reaction product of the polyaniline or a derivative thereof and an organic sulphonic acid or a derivative thereof, followed by a thermal treatment in a mixing apparatus. From the blend or reaction product which has been treated by this way a dry material is obtained which per se or together with a thermoplastic polymer can form homogenous parts without visible flowing marks or other surface defects and which at the same time have a relatively low percolation threshold or they have sufficient conductivity for the different applications.

The easily melt-processable conducting plastics material in question is produced so that the polyaniline or a derivative thereof is brought together with an organic sulphonic acid, whereafter the obtained reaction product or blend is treated thermally at a temperature of about +40°C - +250°C. The pre-protonated mixture of the polyaniline or a derivative thereof and the sulphonic acid, which is as untreated a liquid mixture or suspension which is indefinite, staining, strongly corrosive, and difficult to handle, is hence as result of the thermal treatment changed to a homogenous, solid, relatively inert, and easy-to-handle powder or grain.

The polyaniline doped with a protonic acid has, however, shown to be useful only when it has contained an excess of the protonic acid. This depends on the other hand on that the excess of the protonic acid produces an effective doping and on the other hand that the protonic acid acts as a plasticiser which makes the doped polyaniline melt processable. The acidity of the doped polyaniline is, anyhow, greatly disturbing its use. The melt processing apparatus is corroded and the obtained products corrode and pollute both other blend components and the environment.

The goal of the invention is to provide a process for the preparation, from polyaniline or a derivative thereof and a protonic acid, of a conductive plastics material which is easy to melt process at normal melt temperatures of plastics, i.e. temperatures below about 300°C. In addition to good processing plasticity the goal is also a conductive plastics material product which has excellent and even mechanical properties. The invention also aims at a conductive plastics material which is neutral or substantially neutral, i.e., its pH value is of order about 5-8.

According to an other aspect of the invention there is provided a conductive plastics material which comprises both a polyaniline component doped with a protonic acid and a melt processable thermoset, thermoplastic or elastomeric polymer component which is compatible with said polyaniline component, and a process for the preparation of the mentioned plastics material. In the case of a conducting plastics blend a measure of the compatibility and melt processability is e.g. above mentioned percolation threshold, the target value of which in this connection is below about 15 wt.% of polyaniline which has been doped with a protonic acid, including its additives. The final goal is a conducting plastics material which is stabile both during the processing and as a final product, and a process for the preparation of such a material.

Although a preferred embodiment of the invention relates to a plastics material, which is essentially neutral and at the same time conductive, the invention certainly is not limited to this. The invention is also applicable at a larger pH interval, when possible or desirable. The plastics material is preferably neutral or almost neutral when it is in contact with the environment, e.g. in EMI and ESI shielding applications. In closed systems like electrochemical applications such as batteries, the pH may vary a great deal from acidic to basic.

The above mentioned goals have now been reached with a new process for the preparation of a conducting plastics material, which process is mainly characterised by what is said in the characterising part of patent claim 1. Hence, it has been realized that a plastics material comprising a polyaniline doped with a protonic acid can be plastic, neutral, more conducting and more stabile as a blend when by or after contacting the polyaniline or a derivative thereof and the protonic acid also a metal compound is added. Correspondingly, a melt-processable, non-acidic and conducting plastics material comprising a polyaniline or a derivative thereof which have been doped with a protonic acid can be provided by treating with a metal compound the polyaniline or a derivative thereof which have been doped with a protic acid. The invention also concerns the use of said metal compound or a derivative thereof as an additive of the polyaniline doped with the protic acid, which additive neutralizes, plasticises and stabilizes the polyaniline or a derivative thereof which have been doped with the protonic acid, and is also considerably lowering the percolation threshold the blends formed by it and the non-conducting thermoplastic polymers.

The polyaniline used according the invention can be of any polyaniline quality which can be made as a conducting polymer by doping with a protonic acid, such as the unsubstituted leucoemeraldine, protoemeraldine, emeraldine, nigraniline or toluprotoemeraldine form. Preferably the polyaniline is, anyhow, in the emeraldine base form, the formula of which is presented above in connection with the description of the present art. Also a polyaniline derivative can come into question, such as a polymer made of a substituted aniline, or as a ready polyaniline substituted, i.e., chemically modified polyaniline.

The protonic acid according to the invention can be any type of a protonic acid which is doping polyaniline or a derivative thereof. Typical protonic acids include HCl, H₂SO₄, HNO₃, HClO₄, HBF₄, HPF₆, HF, phosphoric acids, sulphonic acids, pic-ric acid, m-nitrobenzoic acid, dichloroacetic acid and polymeric acids. An especially preferable protonic acid is an organic sulphonic acid such as an aromatic sulphonic acid, especially dodecylbenzenesulphonic acid (DBSA).

By or after contacting the polyaniline or a derivative thereof and the protonic acid, a metal compound according to claim 1 is added which makes the doped polyaniline less acidic, more easily melt-processable, better blendable conducting plastics blend, and more stabile. Of said oxide compounds zinc oxide ZnO is the most preferable.

According to one embodiment of the invention the metal compound is added to the polyaniline which has been doped with a protonic acid and has according to the Finnish Patent Application No. 915,760 been treated thermally at a temperature about 40-250°C and preferably at a temperature about 100-200°C. It is hereby preferable to also use to the mixing a melt mixing apparatus with which the doped polyaniline has been brought into as well a melt-processable form as possible.

When adding the metal compound to the polyaniline doped with the protonic acid, the mole ratio of the metal compound to the protonic acid is between about 1:0.1 - 1:1.1, and preferably between about 1:0.5 - 1:0.7. In this connection it has to be noted that one function of the metal compound is to neutralize the polyaniline doped with the protonic acid, because the polyaniline most often contains more than a stoichiometrical amount of the protonic acid. According to one embodiment the mole ratio of the polyaniline or a derivative thereof to the protonic acid is between about 1:0.1 -1:1.1, preferably between about 1:0.5 - 1:0.7. The molar amount of polyaniline is calculated as the number of aniline units.

According to a preferable embodiment of the invention the metal compound is first reacted with a first acid, whereafter the obtained product is contacted with a blend or a reaction product formed by a polyaniline or a derivative thereof and a second, protonic acid. According to the best embodiment of the invention the metal compound is first reacted with an acid before adding it to the polyaniline which has been doped with a protonic acid.

The first acid with which the metal compound is reacted can be any acid which:
a) together with a metal compound forms a blend and/or reaction product which is substantially neutralising the doped polyaniline. As typical reaction products can be mentioned the buffer salts of a strong base and a weak acid, and the salts, complexes and condensation products comprising a neutralising metallic base,
b) together with a metal compound forms a blend or reaction product which is melt-processable and is preferably a liquid at the melt-processing temperature of plastics i.e. below about 300°C,
c) together with a metal compound forms a plasticiser of the polyaniline which has been doped with a protonic acid, which plasticiser is compatible with the doped polyaniline plasticising it at the same time both during its melt processing and the use, and/or
d) together with a metal compound forms an additive which stabilises the doped polyaniline and prevents the detachment from the polyaniline of the protonic acid acting as a doping agent and also prevents the detached protonic acid from migrating to the surface of the plastics product which is containing the doped polyaniline.

The result of the above mentioned properties which are required of the metal compound and the product formed by the so-called first acid is that the percolation threshold of the plastics blend containing polyaniline or a derivative thereof which have been doped with a protonic acid, i.e., that weight traction of the doped polyaniline by which the conductivity of the plastics blend exceeds 10⁻⁶ S/cm, is lowered to a level well below 20 wt.%. According to one embodiment of the invention the polymer or plastics material has an electrical conductivity of at least about 10⁻⁸ S/cm at a weight traction of said protonated polyanlllne of less than about 0.05, preferably about 0.02 and most preferably about 0.01.

In this connection it is important to note that the acid which is brought together with the metal compound need not to be the same acid as the protonic acid which is used as the doping agent of thew polyaniline, but the only crlierion is that at least one of the above mentioned condition is fulfilled. When spoked about a "first acid" it is hence question of that acid with which the metal compound is reacted as an additive of the doped polyaniline. As distinct from the first acid the doping agent of polyaniline is called "a second protonic acid.

According to the invention the first acid is also a protonic acid such as an acid according to formulae I and II :

A-R₁ I

or 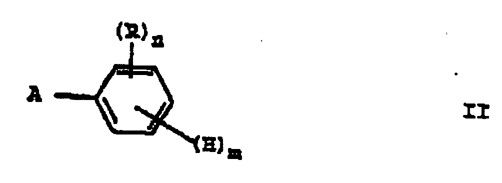
wherein:
A is a sulphonic acid;
n is 1 or 2;
m is an integer 3 or 4, with the proviso that the sum n+m is 5,
R¹ is an alkyl or alkoxy containing 8-14 carbon atoms, or an alkyl containing 6-12 carbon atoms and being substituted with one or more halides;
R is an alkyl or alkoxy containing 4-12 carbon atoms, or an alkyl which has been substituted with one or more halides. Preferable first protonic acids are the sulphonic acids, selenic acids, phosphoric acids, boric acids, carboxylic acids, hydrogen sulphates, hydrogen selenates and hydrogen phosphates, among them especially preferable the sulphonic acids, phosphoric acids and carboxylic acids, and most preferable the sulphonic acids, among them the aromatic sulphonic acids. The most preferable first aromatic sulphonic acid to be reacted with the metal compound is dodecylbenzenesulphonic acid.

The metal compound which is used according the invention is often reacting both with the first and the second protonic acid, wherein its molar fraction to the total amount of the acid has an influence on the product qualities. According to one embodiment of the invention the molar ratio of the metal compound to the total amount af the acid (first acid + second protonic acid) is between about 1:1 - 1:4 and preferably about 1:2.2 - 1:2.7. The most decisive aspect is, anyhow, in which ratio the metal compound is reacted with the first acid, because the polymer additive formed by them has an decisive influence on the plastics blends which contain doped polyaniline. The molar ratio between the metal compound and the first acid is according to one embodiment of the invention about 1:0.5 -1:2, and preferably about 1:1-1:2.

The metal compound and the first acid can in principle be reacted with each other under the most varying reaction conditions, but preferably they are reacted with each other by warming their mixture to a temperature of about 50-200°C and preferably to a temperature of about 130-180°C. It is also preferable to mix the metal compound and the first acid with each other in a warmed melt mixing apparatus which is meant for plastics and which can be e.g. a kneader, compounder or a screw mixer.

Next, the reaction product of the metal compound and the first acid are brought together with the blend or reaction product of the polyaniline or a derivative thereof and the second protonic acid. According to one embodiment the polyaniline which is preferably in the emeraldine base form, has been predoped with an other protonic acid, whereby the molar ratio between them is in the order of about 1:0.1 - 1:1.1 and preferably 1:0.5 - 1:0.7. Most preferably the metal compound is first reacted with the first acid to a metal containing reaction product, which is then reacted with the polyaniline which has been doped with the second protonic acid to a final, conductive plastics material. It is then also preferable to produce the blend or reaction product of the polyaniline or a derivative thereof and the second protonic acid by treating thermally a mixture or a reaction product produced by them at a temperature about 40-250°C and preferably at a temperature about 100-200°C.

The used second, protonic acid is a in the field commonly known acidic doping agent of a polyaniline, and the invention is also directed to a plastics blend and the preparation thereof the polyaniline (or its derivative) doping agent of which is any protonic acid suitable as a dopant, regardless of whether it is the same as or different from said first acid which has been reacted with the metal compound. According to one embodiment the second protonic acid is, however, the same as the first acid, i.e., a protonic acid of the above formulae I or II.

From the point of view of the invention it is preferable to prepare the blend or the reaction product of the polyaniline or a derivative thereof and the second protonic acid by mixing them with each other in a warmed melt-mixing apparatus for plastics material, or the like as in a kneader, compounder or screw mixer.

When mixing together the product formed by the metal compound and the first acid and the product formed by the polyaniline or a derivative thereof and the second protonic acid it is preferable that the molar ratio between the first, a so-called additive product, and the second product formed by the doped polyaniline or a derivative thereof is about 1: 0.1 - 1:4, and preferably about 1:0.5 - 1:1. The combining is preferably carried out at a temperature 50-200°C, more preferably at a temperature 110-150°C, and even more preferably with aid of a melt mixing apparatus such as a kneader, compounder or screw mixer. When the product formed by the metal compound and the first acid and the product formed by the polyaniline or its derivative and the second protonic acid are brought together, the metal compound is preferably a zinc compound and most preferably zinc oxide. Likewise the first acid is preferably a protonic acid, more preferably the same as the second protonic acid, even more preferably an organic sulphonic acid, and most preferably of all dodecylbenzene-sulphonic acid (see above for more alternatives).

The doping of the polyaniline with a protonic acid can also be carried out in a solution or a dispersion. The polyaniline has then to be dissolved e.g. in a polar solvent like N-methylpyrrolidone, dimethylformamide, or dimethyl sulphoxide and doped with a protonic acid. The doping in a dispersion is carried out so that the doping agent is dissolved in the medium and the polyaniline is dispersed in the medium.

Above a process has been presented for the preparation of such a conducting plastics material which comprises an additive formed by a metal compound and a first acid, and a polyaniline doped with a protonic acid, regardless of what other components are included in the plastics blend. It is, anyhow, preferable that the blend or reaction product formed by the polyaniline or its derivative, the acid or acids and the metal compound is brought together with thermoplastic, melt-processable thermoset or melt-processable elastomeric polymerto a conducting plastics mixture or blend. Then it is important that the above mentioned components are chosen so that they are compatible with the polymer and are melt-processable at approximately same temperatures. This means that the above mentioned components can be varied within the disclosed limits depending on which polymer component is chosen, and vice versa. The polymer can be a thermoset or elastomeric polymer, but it is preferably a thermoplastic polymer which can be e.g. a homo or copolymer based on an olefin such as polyethylene or polypropenylene, a homo or copolymer based on styrene or a derivative thereof or a mixture thereof, vinylhomopolymer or copolymer or a mixture thereof, acrylhomopolymer or copolymer or a mixture thereof, or a thermoplastic condensation polymer such as a polyester or a polyamide.

When mixing together a doped polyaniline with its additives and a thermoplastic polymer to a plastics blend it is preferable if the proportion of the blend or the reaction product formed by the polyaniline or a derivative thereof, the acid or the acids and the metal compound of the whole conductive plastics mixture can be between 0,5 - 50 wt.%, but it is preferably between about 1-25 wt.% and more preferably between about 5-15 wt.%. If only the proportion of the polyaniline is calculated then it is preferably 0.1-10 wt.%, most preferably 2-4 wt.%. The combination with the thermoplastic polymer is preferably carried out at a temperature of about 80-300°C and most preferably at a temperature of about 130-200°C. Then it is also preferable if the bringing together is carried out with aid of a melt-mixing apparatus such as a kneader or a screw mixer.

The invention also concerns a melt-processable, conducting plastics material which comprises a polyaniline or a derivative thereof which have been doped with a protonic acid and which is characterized in that the polyaniline or a derivative thereof, which have been doped with a protonic acid, have been treated with a metal compound. To the mentioned components apply the same definitions which have been presented above in connection with the disclosure of the process according to the invention. The same applies to their mixing and reaction parameters and processing methods. It can be mentioned that the product formed by the metal compound and the first acid, i.e., additive, is most preferably a condensation product which is melt-processable at below 300°C. Such a preferable condensation product is e.g. the reaction product of zinc oxide and dodecylbenzenesulphonic acid. The complex thus formed is melt-processable, and its melting point is 115°C.

The thus formed essentially neutral complex can further be melt-mixed with the solidified polyaniline complex according to the FI application 915760. In tests it has been noted that so the polyaniline/doping agent ratio can be lowered even to a value of 1:0.5 without that the processability would suffer from it, because the complex formed by the neutralising agent acts as a plasticiser. If it is to expect that the conducting polyaniline complex contains free doping agent (i.e., the complex is acidic) so an excess of unreacted metal compound can be added to the mixture when prepairing the complex formed by the neutralising agent or the metal compound, which unreacted metal compound when mixed to the conducting polyaniline is reacting with the free doping agent.

The invention also concerns a new additive of polyaniline or doped polyaniline, which additive has been prepared from the mentioned metal compound and mentioned first acid, and the use of the reaction product between the metal compound and the acid for:
a) neutralising,
b) plasticising,
c) lowering the percolation threshold of and/or
d) stabilising

a polyaniline or a derivative thereof which have been doped with a protonic acid. It is preferable, if the metal compound is zinc oxide and the acid is a sulphonic acid, especially dodecylbenzenesulphonic acid.

Although the invention in the preferable embodiment concerns a plastics material which is neutral or substantially neutral the invention is by no means restricted to this. The invention can also be applied to a broader pH range when the use will allow or require it. The plastics material is preferably neutral or almost neutral if it shall be in contact with the environment, e.g. in the EMI or ESI protectable objects. When used in closed targets such as electrochemical applications such as accumulators the pH value of the plastics material can vary within a very broad range from acidic to alkaline.

The above presented most preferable order of addition by the preparation of the conducting plastics materials according to the invention is by no means the only possible order of addition. So according to one embodiment the polyaniline doped with the protonic acid is added together with the metal compound to a mixing apparatus and the first acid is added not until at a later stage. According to an other embodiment the blend or reaction product formed by the metal compound and the first acid is added to the mixing apparatus together with the substantially pure polyaniline, and the other protonic acid is not added until at a later stage. According to a third embodiment the unsolidified mixture of the polyaniline and the second protonic acid is added at the first stage and not until thereafter the unsolidified mixture of the metal compound and the first acid is added to the mixer, wherein all the reactions are taking place in the same mixer. The order of addition can then of course be reversed. According to still another embodiment the polyaniline which has been solidified, i.e., doped with a protonic acid, is added to the mixer together with the solidified, i.e., reacted metal compound, and the excess amount of the protonic acid is nor added until at a later stage.

It is also possible to first add the solidified or reacted doped aniline to the mixer and thereafter the unreacted mixture of the metal compound and the first acid, wherein the reaction between the metal compound and the first acid is taking place in the same connection as the doped polyaniline is neutralised and/or plasticised. Correspondingly can the solidified or reacted metal compound and the first acid first be added to the mixer and thereafter the mixture of the unreacted polyaniline and the second protonic acid, which mixture is both reacting to a doped polyaniline and neutralised and/or plasticised in the mixer with the product of the metal compound and the first acid.

According to still an other alternative to the mixer can be added the pure dry metal compound and at a later stage a solution or the unreacted mixture of the polyaniline and the first and second protic acid. There is then taking place at the same time the neutralising, and final doping of the polyaniline. It is also possible to the mixer the unreacted solution of the polyaniline, the metal compound and the first acid and to add the second protonic acid not until at a later mixing stage. When the polyaniline is first added to the mixing apparatus as such also dry zinc oxide can be added with it or then dry zinc oxide can be added later unreacted together with an acid.

In the following some examples are given about carrying out the invention, the meaning of which examples is only to illustrate the present invention.

### Example 1

0.2 g powdered zinc oxide (ZnO) and 0.6 g liquid dodecylbenzenesulphonic acid (ZnO:DBSA = 1:3 w/w) were mixed together. The mixing was carried out with a dispersing mixer, whereupon the mixture was solidified with aid of heat by mixing in a processing apparatus for plastics at 150°C. As a product of ZnO and DBSA a white reaction product was obtained, Mp. 115°C. The obtained ZnO-DBSA reaction product was powdered with a grinder or a granulator to a powder/granulate.

The mentioned reaction product was then admixed to an acidic polyaniline (PANI)-DBSA product (complex) and a thermoplastic matrix resin granulate. The solid PANI-DBSA complex had been prepared by bringing PANI and DBSA together at a weight ratio 1:4 and by processing the mixture with a screw mixer. A similar method has been presented in the FI Patent application 915760, which is hereby included as a reference. The processing temperature was 180°C. As the matrix plastics was polystyrene PS.

0.8 g ZnO-DBSA reaction product, 0,8 g PANI-DBSA complex and 10,4 g PS resin were mixed together in a melt-processing apparatus (injection molding apparatus), the temperature of which was 180°C. The pH value of the surface of the obtained injection molded product was 7 and the resistance was 500 kΩ. The result was excellent concidering that the amount of the PANI used as the conducting polymer was only 1.5 wt.% of the plastics material.

### Example 2

An acidic, solid PANI-DBSA complex prepared at a weight ratio 1:4 (PANI:DBSA) and the reaction product of zinc oxide and DBSA which had been prepared according to example 1 were mixed with each other mechanically at a weight ratio 1:1. The blend was melt-mixed at a temperature of 130°C with aid of a PVC screw. As a result a neutral complex was obtained, which was neutral, had excellent plasticising properties and which was suitable for melt processing and had a resistance of 100 kΩ.

### Example 3

1105 g acidic PANI-DBSA complex (weight ratio 1:2,5) and 1606 g of a liquid unsolidified ZnO-DBSA-dispersed mixture (weight ratio 1:2.7) were mixed together mechanically. The mixture began to solidify during the mechanical mixing causing heat evolution and solidified totally during about 30-50 minutes. The formed solid, neutral complex had a darkgreen color, the resistance of the material was about 500 kΩ. The material was remarkably well melting and had good melt-processing properties.

### Example 4

400 g of ZnO and 2880 g DBSA (weight ratio 1:7.2) were mixed with each other with a blender. To the mixture 720 g PANI-EB (emeraldine base) powder was added which also was dispersed with the blender. The so prepared dark grey liquid mixture was solidified by a process according to the FI-patent application 915760 at a temperature about 185°C. As a result a neutral, solid, well melting complex with a resistance 500 Ω was obtained.

### Example 5

A PANI-DBSA complex was prepared according to FI Patent Application No. 915760 at a weight ratio 1:2.5. A solid reaction product of zinc (ZnO 27 wt.%) and DBSA (73 wt.%) was prepared. A temperature of 130°C was used in the preparation of the reaction product. A blend was prepared by the following way: 2.4 g of a mixture containing 2.4 parts ZnO-reaction product and 3.5 parts above mentioned PANI-complex was mixed to 9.6 g polystyrene (Neste SB 735) and the mixture was melt-processed at a temperature 170°C. A a result an injection molded piece was obtained having an excellent surface quality and a resistance 30 MΩ.

### Example 6

15 g of a doped PANI-DBSA complex (PANI:DBSA weight ratio about 1:1.2) was mixed mechanically to 15 g of the ZnO-DBSA reaction product of of example 1. The above mentioned mixture was melt-blended with aid of the mixing apparatus described in the FI Patent application 915760 at a temperature 130°C. As a result a neutral melt-processable complex was obtained having good plasticising propertied and a resistance of 30 kΩ.

### Example 7

5 g PANI EB and 15 g ZnO-DBS reaction product according to the example 1 was melt-mixed according to example 6. As a result a neutral, light green complex was obtained having a resistance of 5 MΩ.

### Example 8

25 wt. % ZnO-DBSA (weight fraction, 1:3) and 75 wt. % PANI-DBSA (weight fraction, 1:4) are blended. T = 150°C. Re-sistance of the formed piece R = 3 kΩ.

### Example 9

20 wt.% ZnO-DBSA (weight fraction, 1:3) and 80 wt.% PANI-DBSA (weight fraction, 1:2.5) are blended. T = 150°C. Resistance of the formed piece R = 200 kΩ.

### Example 10

20 wt.% of the product of example 9 and 80 wt.% Neste polystyrene SB735 are blended. T = 160°C. Resistance of the formed testing piece R = 500 kΩ.

### Example 11

25 wt.% of the product of example 9 and 75 wt.% Neste polyethylene NCPE 2220 are blended. T = 160°C. Resistance of the formed testing piece R = 200 kΩ.

### Example 12

50 wt.% ZnO-DBSA (weight fraction, 1:4) and 50 wt.% PANI-DBSA (weight fraction, 1:4) are blended. T = 150°C. Resistance of the formed testing piece R = 200 kΩ.

### Example 13

13 wt.% of the product of example 12 and 87 wt.% Neste polystyrene SB735 are blended. T = 150°C. Resistance of the formed testing piece R = 2MΩ.

### Example 14

20 wt.% of the product of example 12 and 80 wt.% Neste polyethylene NCPE 2220 are blended. T = 150°C. Resistance of the formed testing piece R = 1 MΩ.

### Example 15

50 wt.% ZnO-DBSA (weight fraction, 1:4) and 50 wt.% PANI-DBSA (mole ratio, 1:0.5) are blended. T = 150°C. Resistance of the formed testing piece R = 500 Ω.

### Example 16

25 wt. % ZnO-DBSA (weight fraction, 1 :3) and 75 wt.% PANI-DBSA (weight fraction, 1:2.5) are blended. T= 150°C. Resistance of the formed testing piece R = 1 kΩ.

### Example 17

20 wt.% of the product of example 16 and 87 wt.% Neste polystyrene SB735 are blended. T = 150°C. Resistance of the formed testing piece R = 5 MΩ.

### Example 18

20 wt.% of the product of example 16 and 80 wt.% Neste polyethylene NCPE 2220 are blended. T = 150°C. Resistance of the formed testing piece R = 10 MΩ.

From the blends according to examples 7-18 testing pieces were prepared in an injection moulding machine. The blends prepared in these experiments had by the injection moulding good plasticising properties, the working trace was good, and the mechanical properties of the products closely resembled those of the matrix plastics.

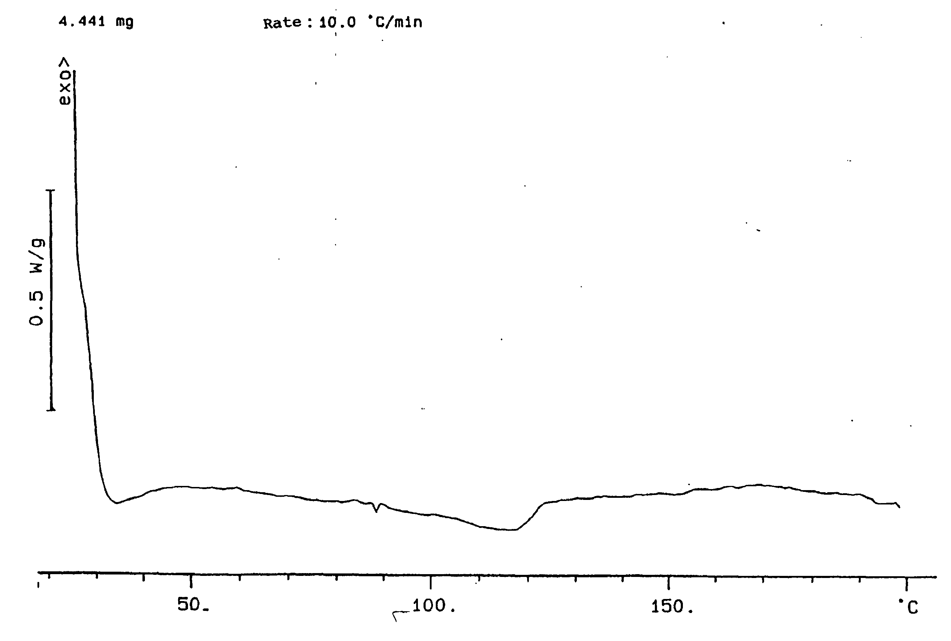

The parameters and results of the examples 1-18 (pH value, resistance) are presented in the accompanying Table and the differential scanning calorimetry curve (DSC-curve) of the ZnO-DBSA reaction product prepared in example 1 is presented in the accompanying figure.

**Table 1**

| Example | ZnO/DBSA | PANI/ DBSA | T₂/°C | Matrix | pH | R |
|---|---|---|---|---|---|---|
| 1 | 1:3 0.8g | 1:4 0.8g | 180 | PS 10.4g | 7 | 500 kΩ |
| 2 | 1:3 0.8g | 1:4 0.8g | 130 | No Matrix | 6-7 | 100 kΩ |
| 3 | 1:2.7 1606g | 1:25 1105g | No Warm. | No Matrix | 6-7 | 500 kΩ |
| 4 | 1:7.2 2880g | ∞ 720g | 185 | No Matrix | 6-7 | 500 kΩ |
| 5 | 1:2.7 0.98g | 1:2.5 1.425g | 170 | PS 9.6g | 6-7 | 30 MΩ |
| 6 | 1:3 15g | 1:1.2 15g | 130 | No Matrix | 6-7 | 30 MΩ |
| 7 | 1:3 15g | ∞ 5g | 130 | No Matrix | 6-7 | 5 MΩ |
| 8 | 1:3 2.5g | 1:4 7.5g | 150 | No Matrix | 6-7 | 3 kΩ |
| 9 | 1:3 2.0g | 1:2.5 8.0g | 150 | No Matrix | 6-7 | 200 kΩ |
| 10 | 1:3 2.0g | 1:2.5 8.0g | 150 160 | PS 40g | 6-7 | 500 kΩ |
| 11 | 1:3 2.0g | 1:2.5 8.0g | 150 160 | PE 30g | 6-7 | 200 kΩ |
| 12 | 1:4 2.0g | 1:4 2.0g | 150 | No Matrix | 5-6 | 200 kΩ |
| 13 | 1:4 2.0g | 1:4 2.0g | 150 150 | PS 27g | 5-6 | 2 MΩ |
| 14 | 1:4 2.0g | 1:4 2.0g | 150 150 | PE 16g | 5-6 | 1 MΩ |
| 15 | 1:4 2.0g | 1:0.5 (Mole ratio) 2.0g | 150 | No Matrix | 5-6 | 500 Ω |
| 16 | 1:3 2.0g | 1:2.5 6.0g | 150 | No Matrix | 6-7 | 1 kΩ |
| 17 | 1:3 2.0g | 1:2.5 6.0g | 150 150 | PS 54g | 6-7 | 5 MΩ |
| 18 | 1:3 2.0g | 1:2.5 6.0g | 150 150 | PE 32g | 6-7 | 10 MΩ |

### Example 19

A PANI-DBSA pre-mixture was prepared at weight ratio 1:4. A blend was prepared by mixing PANI-DBSA pre-mixture and 8-10 wt. % ZnO. After mixing the blend was acidic. The blend was solidified in a melt-processing apparatus, the temperature of which was about 170°C. The formed solid product had a resistance about 250 ohm and pH was about 5-6.

### Example 20

An acidic, solid PANI-DBSA complex was prepared according to Patent Application FI 916760 at a weight ratio 1: 4. A blend was prepared by mixing solid PANI-DBSA complex and 8-10 wt. % ZnO. The blend was mixed in a melt-processing apparatus. The properties of the product was same as in example 19.

### Example 21

A blend was made by mixing: 29.7-29.9% acidic, solid PANI-DBSA complex (weight ratio 1:4), 70% non-conductive substrate (PE) and 0.1-0.3% ZnO. The mixture was melt-blended at a temperature 160-170°C. The formed solid product had a resistance about 100 kohm and pH was about 5-6.

### Example 22

A blend was made as in example 21, but instead of ZnO was used CaO.

### Example 23

A mixture was made as in example 19, but instead of ZnO was used Ba(OH)₂. The mixture solidified already during mixing. The formed solid product had a resistance about 170 kohm.

### Comparative Examples A-C (not according to the invention)

### Comparative Example A

An amount of 0.6 g of polyaniline (PANI) (of an inherent viscosity in 97% sulphuric acid, at room temperature, in a 0.1% w/w solution of 1.2 dl/g), in its conductive salt form with dodecylbenzenesulphonic acid (DBSA), having a molar ratio of PANI(DBSA)_{0.5}, was mixed with 2.4 g of finely divided powder of isotactic polypropylene (Neste VB 80 12 B, MFR = 8 g/10 min @ 230°C) using a laboratory-scale twin-screw extruder at 170°C, at 100 rpm for 5 minutes. The resulting polypropylene blend contained 20 wt.% of the PANI(DBSA)_{0.5} complex and had an electrical conductivity of 10⁻⁶ S/cm, as measured by the usual four probe technique. Small samples of the blend were immersed in water and the pH was monitored. After 24 hrs the pH of the water was 5.6.

This example illustrates that conductive PANI(DBSA)_{0.5} salt can be melt-blended with thermoplastics to produce an electrically conducting polymer blend which is only slightly acidic after immersion in water for 24 hours. However, the required amount of the PANI salt is high to achieve desirable levels of conductivity, i.e. the percolation threshold is higher than 20 wt.%.

### Comparative Example B

A total of 3 g of a mixture containing 2.4 g of low density polyethylene (LDPE, Neste NCE 1804, MI 1.8) and 0.6 grams of PANI(DBSA)_{1.1}, i.e. a PANI(DBSA) complex containing an excess amount of DBSA (wt-ratio PANI/DBSA = 1/4), was mixed in a laboratory-scale twin-screw extruder at 180°C at 100 rpm for 3.5 minutes. The resulting blend of LDPE contained 20 wt.% of PANI(DBSA)_{1.1} and had a conductivity of 2 x 10⁻⁴ S/cm. Pieces of the blend were immersed in water and the pH was monitored. After 24 hrs the pH of the water was pH - 1.

### Comparative Example C

A polymer blend was made according to Example B with the exception that only 10 wt.% of PANI(DBSA)_{1.1} was used instead of 20%. The conductivity of the resulting blend was 3.10⁻⁷ S/cm. Pieces of the blend were immersed in water and the pH was monitored. After 24 hrs the pH of the water was pH - 1.

Comparative examples B and C demonstrate that electrically conducting polymer blends can be produced using thermoplastics and PANI(DBSA)_{1.1} utilizing conventional melt-processing techniques. The examples further demonstrate, however, that addition of an excess amount of DBSA to the PANI salt is required in order to lower the percolation threshold of the conductivity. However, due to the large amount of free acid in the blend, the acidity of the final product is unacceptably high.

### Example 24

ZnO powder and liquid DBSA, using different molar ratios ranging from 1:1 to 1:8, were mixed between 130-180°C. During the reaction, water was liberated under the formation of a complex between ZnO and DBSA, suggesting the formation of the structure denoted Zn(DBS)₂. This solid complex had a melting temperature of ca. 115°C, was observed to be liquid crystalline and of fiber forming characteristics, in addition of being non-conducting. For simplicity, in subsequent examples, this reaction product will be referred to as Zn(DBS)₂.

### Example 25

An amount of 2.7 g of LDPE, 0.3 g of PANI(DBSA)_{0.5} and 0.86 g of the Zn(DBS)₂ material prepared according to the method of Example 24 such that the molar ratio Zn(DBS)₂/PAN I (DBSA)_{0.5} = 1.0, were mixed in a twin-screw extruder for 3.5 minutes at 180°C at 100 rpm. The conductivity of the resulting polymer blend, containing 7.8 wt.% of PANI (DBSA), had a four probe conductivity of 8 x 10⁻² S/cm. Pieces of the blend were immersed in water and the pH was monitored. After 24 hrs the pH of the water was pH ~ 4.

### Examples 26-30

Blends were made according to Example 25 but with different amounts of PANI(DBSA)_{0.5}. The ratio of Zn(DBS)₂/ PANI(DBSA)_{0.5} was maintained at 1.0. The conductivities of the resulting polymer blends were measured and are listed in Table 2 below.

**Table 2**

| Example | PANI(DBSA)_{0.5} wt.% | Conductivity (S/cm) |
|---|---|---|
| 26 | 2.3 | 4 x 10⁻⁵ |
| 27 | 3.2 | 2 x 10⁻³ |
| 28 | 4.4 | 3 x 10⁻² |
| 29 | 7.8 | 8 x 10⁻² |
| 30 | 12.8 | 2 x 10⁻¹ |

### Example 31

An amount of 2.7 g of isotactic polypropylene (i-PP, Neste, VP 80 12 B), 0.3 g of PANI(DBSA)_{0.5} and 0.86 g of Zn (DBS)₂, prepared according to Example 24, were mixed in a twin-screw extruder at 170°C, at 100 rpm for 5 minutes. The resulting polymer blend, containing 7.8 wt.% PANS(DBSA)_{0.5} of the total composition of the blend, had a four probe conductivity of 2 x 10⁻² S/cm. Pieces of the blend were immersed in water and the pH was monitored. After 24 hrs the pH of the water was pH ~ 4.

### Examples 32-36

Blends were made according to Example 31 but with different amounts of PANS(DBSA)_{0.5}. The ratio of Zn(DBS)₂/ PANI(DBSA)_{0.5} was varied. The conductivities of the resulting polymer blends were measured and are listed in Table 3 below.

**Table 3**

| Example | PANI(DBSA)_{0.5} wt.% | Conductivity (S/cm) |
|---|---|---|
| 32 | 3.2 | 4 x 10⁻⁶ |
| 33 | 4.4 | 2 x 10⁻³ |
| 34 | 7.8 | 2 x 10⁻² |
| 35 | 12.8 | 6 x 10⁻² |
| 36 | 21.0 | 2 x 10⁻¹ |

### Example 37

An amount of 2.7 g polystyrene (Neste, SB 735), 0.3 g PANI(DBSA)_{0.5} and 0.86 g of Zn(DBS)₂, prepared according to example 1, were mixed in a twin-screw extruder at 190°C at 100 rpm for 5 minutes. The resulting polymer blend, containing 7.8 wt.% of PANI(DBSA)_{0.5} of the total composition of the blend, had a four probe conductivity of 2 x 10⁻² S/cm. Pieces of the blend were immersed in water and the pH was monitored. After 24 hrs the pH of the water was pH ~ 5.

### Examples 38-42

Blends were prepared according to Example 14 but with different amounts of PANI(DBSA)_{0.5}. The ratio of Zn (DBS)₂/PANI (DBSA)_{0.5} was maintained at 1.0. The conductivities of the resulting polymer blends were measured and are listed in Table 4 below.

**Table 4**

| Example | PANI(DBSA)_{0.5} wt.% | Conductivity (S/cm) |
|---|---|---|
| 38 | 2.3 | 8 x 10⁻⁷ |
| 39 | 3.2 | 5 x 10⁻⁶ |
| 40 | 4.4 | 8 x 10⁻⁴ |
| 41 | 7.8 | 2 x 10⁻³ |
| 42 | 12.8 | 2 x 10⁻² |

Examples 25-42 and Tables 2-4 demonstrate that by the addition of Zn(DBS)₂ to a mixture of a common thermoplastic commodity polymer and PANI(DBSA)_{0.5}, polymer blends can be produced, using ordinary melt processing techniques, that exhibit surprisingly lower percolation thresholds for electrical conductivity (1-3 wt.% of the conducting polyaniline complex) than observed in blends produced without the addition of the Zn(DBS)₂.

### Example 43

A polymer blend was made according to example 2 with the exception that instead of ZnO, CuO (Aldrich) was used as the metal compound. The resulting blend was electrically conducting, the four point conductivity being 10⁻⁵ S/cm.

Example 25 demonstrates that also other metal compounds than ZnO can be used to form a condensation product with a protonic acid that acts as a percolation threshold reducing agent.

### Example 44

A polymer blend was made according to example 2 with the exception that instead of DBSA, ethylsulphonic acid (ESA, Aldrich) was used as the protonic acid. The resulting blend was electrically conducting and the four point conductivity was measured to be 10⁻⁴ S/cm.

### Example 45

7.17 g of Zn(DBS)₂ was mixed with 1.7 g of conducting polyaniline compound Versicon™, (Allied Signal) for 5 minutes at 130°C in a conical twin-screw extruder. 0.355 g of the obtained mixture, 0.717 g of additional Zn(DBS)₂ and 2.328 g of acrylonitrile-butadiene-styrene (ABS) were mixed in the same extruder at 160°C for (5) minutes. The conductivity of films of the above blend, pressed at 180°C, was 8.3 x 10⁻² S/cm, containing only 2 wt.% of the conductiving component Versicon™.

### Comparative Example D (outside this invention)

Example 1 was repeated, but instead of DBSA, p-toluene sulphonic acid (TSA, Aldrich) was used. Mixing of ZnO and TSA resulted in the formation of a white powder that did not display an melting point below 300°C. A polymer blend was made according to Example 20 with the exception that instead of Zn(DBS)₂, the above condensation product of ZnO and TSA was used. The resulting blend was non-conducting and optical microscopy showed that the blend comprised of dispersed particles of the condensation product.

### Comparative Example E (outside this invention)

A polymer blend was made according to Example 25 with the exception that instead of Zn(DBS)₂, the common, commercial plasticisers, pentadecyl phenol and dodecylphenol (Aldrich) were used. The blends, although well plasticised, were non-conducting.

This example illustrates that the use of the aforementioned condensation products of metal compounds, preferably ZnO, and protonic acids indeed were unusually effective in functioning as a neutralisation, plasticisation and percolation-threshold reducing agents, which was not observed in the use of the common plasticisers as those employed in Example E.

## Claims

1. A process for the preparation of a cunductive polymer or plastics material by bringing into contact:
(a) polyaniline or a derivative thereof and
(b) a protic acid dopant having the formula:
A - R₁ (I)
wherein
A is a sulphonic acid group
R¹ is an alkyl or alkoxy containing 6-14 carbon atoms, or an alkyl containing 6-12 carbon atoms and being substituted with one or more halogens,
or 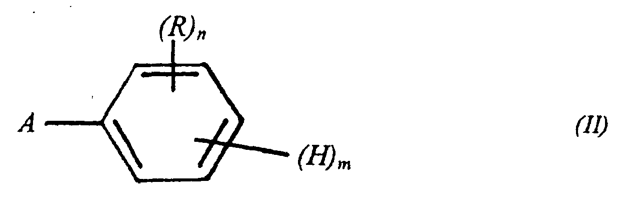
wherein:
A is a sulphonic acid group,
R is an alkyl or alkoxy containing 4-12 carbon atoms, or an alkyl which has been substituted with one or more halides,
n is 1 or 2, and
m is an integer 3 or 4, with the provisio that the sum n + m is 5,
**characterized in that** during contacting or thereafter,
(c) a metal compound is added, which is selected from the oxides of Zn, Cu, Ca and Mg, which neutralizes said material and lowers the percolation threshold thereof.

2. A process according to claim 1, **characterized in that** the metal compound is ZnO.

3. A process according to claim 1, 2, **characterized in that** the protic acid dopant is dodecylbenzenesulphonic acid.

4. A process according to claim 1, 2, **characterized in that** a mixture containing polyaniline or a derivative thereof and a protic acid is heated to a temperature of 100-200°C and mixed, preferably with a melt-mixing apparatus.

5. A process according to one of the preceding claims, **characterized in that** unsubstituted polyaniline, which is preferably in the emeraldine base form, is brought in contact with a protic acid.

6. A process according to one of the preceding claims, **characterized in that** the molar ratio between the metal compound and the protic acid is between 1:0.1 - 1:1.1, preferably between 1:0.5 - 1:0.7.

7. A process according to one of the preceding claims, **characterized in that** the the molar ratio between the polyaniline or the derivative thereof and the protic acid is between 1:0.1 - 1:1.1, preferably between 1:0.5 - 1:0.7.

8. A process according to one of the preceding claims, **characterized in that** the metal compound is first reacted with a first acid, whereupon the obtained product is brought together with a blend or reaction product formed by the polyaniline and a second protic acid, which is said protic acid dopant.

9. A process according to claim 8, **characterized in that** the molar ratio between the metal compound and the total amount of acid (the first acid plus the second protic acid) is between 1:1-1:4, preferably between 1:2.2-1:2.7.

10. A process according to claim 8 or 9, **characterized in that** the molar ratio between the metal compound and the first acid is 1:0.5-1:2, preferably 1:1-1:2.

11. A process according to claim 8, 9, or 10, **characterized in that** the metal compound and the first acid are reacted with each other by warming their mixture to a temperature of 50-200°C, preferably to a temperature of 130-180°C.

12. A process according to one of claims 8-11, **characterized in that** the metal compound and the first acid are mixed with each other in a warmed melt-mixing apparatus meant for plastics, such as a screw mixer or a compounder.

13. A process according to one of claims 8-12, **characterized in that** the molar ratio between the polyaniline or a derivative thereof and the second protic acid is between 1:0.1 - 1:1.1, preferably between 1:0.5 - 1:0.7.

14. A process according to one of claims 8-13, **characterized in that** the blend or reaction product of the polyaniline or its derivative and the second protic acid is prepared by the thermal treatment of their mixture at a temperature of +40 - +250°C, preferably at a temperature of 100-200°C.

15. A process according to claim 14, **characterized in that** the blend or reaction product of the polyaniline or its derivative and the second protic acid is produced by mixing then with each other in a warmed melt-mixing apparatus for plastics, or the like such as a screw mixer.

16. A process according to one of claims 11-15, **characterized in that** the molar ratio between product formed by the metal compound and the first acid and the product of the polyaniline or its derivative and the second, protic acid is between 1:0.1 - 1:4, preferably between 1:0.5 - 1: 1.

17. A process according to one of claims 8-16, **characterized in that** the product formed by the metal compound and the first acid is brought together with the blend or reaction product formed by the polyaniline or its derivative and the second, protic acid at a temperature of 50-200°C, preferably at a temperature of 110-150°C.

18. A process according to claim 17, **characterized in that** said bringing together is carried out with aid of a melt-mixing apparatus such as a screw mixer or a compounder.

19. A process according to one of claims 8-18, **characterized in that** the first acid is a protic acid.

20. A process according to claim 19, **characterized in that** the first protic acid is selected from sulphonic acids, selenic acids, phosphoric acids, boric acids and carboxylic acids; and hydrogen sulphates, hydrogen selenates, and hydrogen phosphates.

21. A process according to claim 20, **characterized in that** the first protic acid is selected from sulphonic acids, phosphoric acids or carboxylic acids.

22. A process according to claim 21, **characterized in that** the first protic acid is selected from sulphonic acids.

23. A process according to claim 22, **characterized in that** the first protic acid is dodecylbenzenesulphonic acid.

24. A process according to claim 6 and 23, **characterized in that** the metal compound is zinc oxide and the first protic acid is dodecylbenzenesulphonic acid, whereby the obtained product is a condensation product.

25. A process according to claim 24, **characterized in that** the condensation product has a softening or melting point of less than 300°C and is fluid during mixing and/or processing.

26. A process according to one of the preceding claims, **characterized in that** the blend or reaction product formed by the polyaniline or its derivative, the acid(s) and the metal compound is brought together with a thermoset, thermoplastic or a thermoelastic polymer, preferably a thermoplastic polymer to form a conducting plastics blend.

27. A process according to claim 26, **characterized in that** the share of the blend or the reaction product of the polyaniline or its derivative, the acid(s) and the metal compound of the whole conducting plastics blend is between 1-25 wt.%, preferably between 5-15 wt.%.

28. A process according to claim 26 or 27, **characterized in that** the bringing together is carried out at a temperature of 80-300°C, preferably at a temperature of about 130-200°C.

29. A process according to claim 26, 27 or 28, **characterized in that** said bringing together is carried out with aid of a melt-mixing apparatus such as a screw mixer or a compounder.

30. A process according to one of claims 26-29, **characterized in that** the thermoplastic polymer is a homo or copolymer based on an olefin such as polyethylene or polypropylene, a homo or copolymer based on styrene or a derivative thereof, vinylhomopolymer or copolymer or a mixture thereof, acrylhomopolymer or -copolymer or a mixture thereof, or a thermoplastic condensationpolymer.

31. A melt-processable, conducting *polymer or* plastics material containing a polyaniline or a derivative thereof which have been doped with a protic acid dopant having the formula:
A - R₁ (I)
wherein:
A is a sulphonic acid group
R¹ is an alkyl or alkoxy containing 6-14 carbon atoms, or an alkyl containing 6-12 carbon atoms and being substituted with one or more halogens,
or 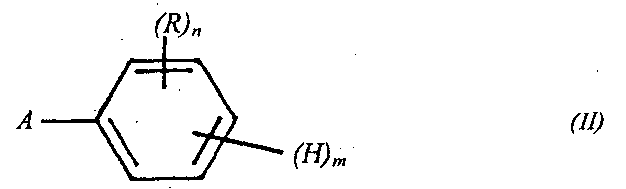
wherein:
A is a sulphonic acid group,
R is an alkyl or alkoxy containing 4-12 carbon atoms, or an alkyl which has been substituted with one or more halogens.
n is 1 or 2, and
m is an integer 3 or 4, with the provisio that the sum n + m is 5,
**characterized in that** the polyaniline or its derivative, which have been doped with the protic acid dopant, has been treated with a metal compound, which is selected from the oxides of Zn, Cu, Ca and Mg, and their reaction product as acid, neutralizes said material and lowers the percolation threshold thereof.

32. A polymer or plastics material according to claim 31, **characterized in that** the protic acid dopant is dodecylbenzenesulphonic acid.

33. A polymer or plastics material according to claim 31 or 32, **characterized in that** the metal compound is a zinc oxide or a derivative thereof.

34. A polymer or plastics material according to claim 31, 32 or 33, **characterized in that** the polyaniline or its derivative and the protic acid are treated thermally, preferably at 100-200°C and preferably by mixing with a melt-processing apparatus.

35. A polymer or plastics material according to one of claims 31-34, **characterized in that** the metal compound has first been reacted with the first acid, whereupon the obtained product has been brought together with the blend or reaction product formed by the polyaniline and the second, protic acid dopant.

36. A polymer or plastics material according to one of claims 31-35, **characterized in that** also the first acid is a protic acid, preferably the same as the second, protic acid.

37. A polymer or plastics material according to one of claims 35 or 36, **characterized in that** the product of the metal compound and the first acid is a product which is melt-processable at below 300°C.

38. A polymer or plastics material according to claim 37, **characterized in that** the metal compound is zinc oxide and the first acid is dodecylbenzenesulphonic acid.

39. A polymer or plastics material according to one of claims 31-38, **characterized in that** the second protic acid is

40. A polymer or plastics material according to one of claims 31-39, **characterized in that** the molar ratio between the metal compound and the first acid is 1:0.5 - 1:2, preferably between 1:1 - 1:2.

41. A polymer or plastics material according to one of claims 31-40. **characterized** that the molar ratio of the product formed by the metal compound and the first acid and the reaction product formed by the polyaniline or a derivative thereof and the second, protic acid is between 1:0.1 - 1:4, preferably between 1:0.5 - 1:1.

42. A polymer or plastics material according to one of claims 31-41, **characterized in that** is comprises a thermoset, thermoplastic or thermoelastic polymer, preferably a thermoplastic polymer.

43. A polymer or plastics material according to claim 42, **characterized in that** the thermoplastic polymer is a homo or copolymer based on an olefin such as polyethylene or polypropylene, a homo or copolymer based on styrene or a derivative thereof or a mixture thereof, vinylhomopolymer or copolymer or a mixture thereof, acrylhomopolymer or copolymer or a mixture thereof, or a thermoplastic condensation polymer.

44. A polymer or plastics material according to claim 42 or 43, **characterized in that** the share of the polyaniline or a derivative derivative thereof, the acid(s) and the metal compound of the total amount of them and the thermoplastic polymer is between 0.5-50 wt.%, preferably between 5-15 wt.%.

45. A polymer or plastics material according to one of claims 31-44, **characterized in that** the electrical conductivity is at least 10⁻⁸ S/cm at a weight fraction of said protonated polyaniline polymer of less than 0.05.

46. A polymer or plastics material according to claim 45, **characterized in that** the electrical conductivity it is at least 10⁻⁸ S/cm at a weight fraction of said protonated polyaniline polymer of less than 0.02.

47. A polymer or plastics material according to claim 46, **characterized in that** the electrical conductivity is at least 10⁻⁸ S/cm at a weight fraction of said protonated polyaniline polymer of less than 0.01.

48. The use of a metal compound which is selected from the oxides of Zn, Cu, Ca, and Mg or the reaction of such a metal compound and an acid for:
a) neutralising
b) plasticising
c) lowering the percolation threshold of and/or
d) stabilising
a polyaniline or a derivative thereof which have been doped with a protic acid dopant having the formula:
A - R₁ (I)
wherein:
A is a sulphonic acid group
R¹ is an alkyl or alkoxy containing 6-14 carbon atoms, or an alkyl containing 6-12 carbon atoms and being substituted with one or more halogens,
or
dodecylbenzenesulphonic acid.

49. The use according to claim 48, **characterized in that** the metal compound is zinc oxide and the acid is a sulphonic acid, preferably dodecylbenzenesulphonic acid.

50. A polymer or plastics material according to one of claims 36-49, **characterized in that** the electrical conductivity is at least about 10⁻⁸ S/cm at a weight traction of said protonated polyaniline polymer of less than about 0.05.

51. A polymer or plastics material according to claim 50, **characterized in that** the electrical conductivity it is at least about 10⁻⁸ S/cm at a weight fraction of said protonated polyaniline polymer of less than about 0.02.

52. A polymer or plastics material according to claim 51, **characterized in that** the electrical conductivity is at least about 10⁻⁸ S/cm at a weight fraction of said protonated polyaniline polymer of less than about 0.01. 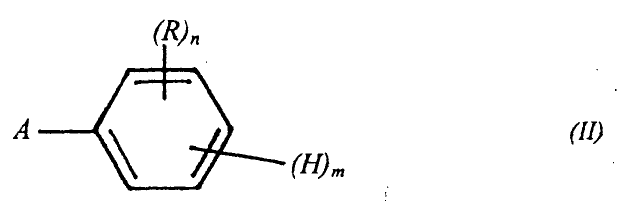
wherein:
A is a sulphonic acid group,
R is an alkyl or alkoxy containing 4-12 carbon atoms, or an alkyl which has been substituted with one or more halogens,
n is 1 or 2, and
m is an integer 3 or 4, with the provisio that the sum n + m is 5.

53. The use of a metal compound or the reaction product of a metal compound and an acid for:
e) neutralising
f) plasticising
g) lowering the percolation threshold of and/or
h) stabilising
a polyaniline or a derivative thereof which have been doped with a protonic acid dopant having the formula:
A - R₁ *(I)*
wherein:
A is a sulphonic acid group
R¹ is an alkyl or alkoxy containing 6-14 carbon atoms, or an alkyl containing 6-12 carbon atoms and being substituted with one or more halogens,
or 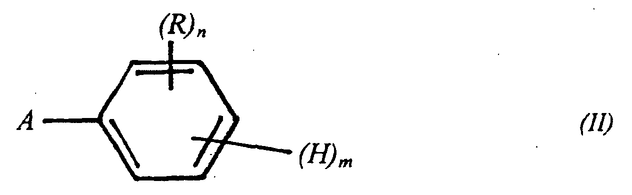
wherein:
A is a sulphonic acid group,
R is an alkyl or alkoxy containing 4-12 carbon atoms, or an alkyl which has been substituted with one or more halogens,
n is 1 or 2, and
m is an integer 3 or 4, with the provisio that the sum n + m is 5.

54. The use according to claim 53, **characterized in that** the metal compound is zinc oxide and the acid is a sulphonic acid, preferably dodecylbenzenesulphonic acid.

55. Method for neutralising acidic polyaniline compositions, **characterized in that** an acidic mixture of polyaniline is contacted with a neutralising agent comprising a metal compound.

56. Method according to claim 55. **characterized in that** the metal of the metal compound is selected from the group of Zn, Cu, Ca and Mg, preferably Zn.

57. Method according to claim 56, **characterized in that** the metal compound is ZnO.

## Patentansprüche

1. Verfahren zur Herstellung eines leitenden Polymer- oder Kunststoffmaterials durch Inkontaktbringen
(a) eines Polyanilins oder eines Derivats davon, und
(b) eines protonischen Säuredotiermittels der Formel
A-R₁ (1)
wobei
A eine Sulfonsäuregruppe ist,
R₁ ein Alkyl oder Alkoxy mit 6-14 Kohlenstoffatomen oder ein Alkyl mit 6-12 Kohlenstoffatomen und mit einem oder mehreren Halogenen substituiert ist,
oder 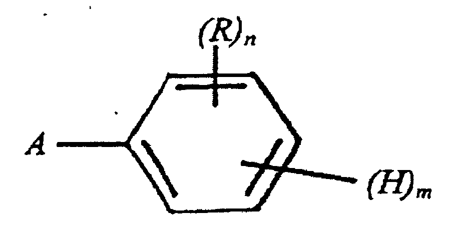
wobei:
A eine Sulfonsäuregruppe ist,
R ein Alkyl oder Alkoxy mit 4-12 Kohlenstoffatomen ist, oder ein Alkyl ist, das mit einem oder mehreren Halogeniden substituiert wurde,
n 1 oder 2 ist, und
m eine Ganzzahl 3 oder 4 ist, allerdings unter der Voraussetzung, dass die Summe n + m gleich 5 ist,
**dadurch gekennzeichnet, dass** während des Kontaktes oder anschließend an den Kontakt
(c) eine Metallverbindung hinzugefügt wird, die aus den Oxiden von Zn, Cu, Ca und Mg ausgewählt ist, welche das Material neutralisiert und dessen Perkolationsschwellenwert absenkt.

2. Verfahren nach Anspruch 1, **dadurch gekennzeichnet, dass** als Metallverbindung ZnO verwendet wird.

3. Verfahren nach Anspruch 1 oder 2, **dadurch gekennzeichnet, dass** als protonisches Säuredotiermittel Dodecylbenzolsulfonsäure verwendet wird.

4. Verfahren nach Anspruch 1 oder 2, **dadurch gekennzeichnet, dass** eine Mischung aus Polyanilin oder einem Derivat davon und einer protonischen Säure auf eine Temperatur von 100 bis 200 °C erhitzt und vorzugsweise mittels einer Schmelzmischvorrichtung vermischt wird.

5. Verfahren nach einem der vorhergehenden Ansprüche, **dadurch gekennzeichnet, dass** ein nichtsubstituiertes Polyanilin, das sich vorzugsweise in der Emeraldingrundform befindet, in Kontakt mit einer protonischen Säure gebracht wird.

6. Verfahren nach einem der vorhergehenden Ansprüche, **dadurch gekennzeichnet, dass** das Molverhältnis zwischen der Metallverbindung und der protonischen Säure 1:0,1 bis 1:1,1, vorzugsweise 1:0,5 bis 1:0,7 beträgt.

7. Verfahren nach einem der vorhergehenden Ansprüche, **dadurch gekennzeichnet, dass** das Molverhältnis zwischen dem Polyanilin oder seinem Derivat und der protonischen Säure 1:0,1 bis 1:1,1, vorzugsweise 1:0,5 bis 1:0,7 beträgt.

8. Verfahren nach einem der vorhergehenden Ansprüche, **dadurch gekennzeichnet, dass** man die Metallverbindung zuerst mit einer ersten Säure reagieren lässt, und dass das sich ergebende Produkt mit einer Mischung oder einem Reaktionsprodukt zusammengebracht wird, das aus dem Polyanilin und einer zweiten protonischen Säure gebildet wird, bei der es sich um das protonische Säuredotiermittel handelt.

9. Verfahren nach Anspruch 8, **dadurch gekennzeichnet, dass** das Molverhältnis zwischen der Metallverbindung und der Gesamtmenge an Säure (d.h. die erste Säure plus die zweite protonische Säure) 1:1 bis 1:4, vorzugsweise 1:2,2 bis 1:2,7 beträgt.

10. Verfahren nach Anspruch 8 oder 9, **dadurch gekennzeichnet, dass** das Molverhältnis zwischen der Metallverbindung und der ersten Säure 1:0,5 bis 1:2, vorzugsweise 1:1 bis 1:2 beträgt.

11. Verfahren nach einem der Ansprüche 8, 9 oder 10, **dadurch gekennzeichnet, dass** man die Metallverbindung und die erste Säure **dadurch** miteinander reagieren lässt, dass ihre Mischung auf eine Temperatur von 50 bis 220°C, vorzugsweise 130 bis 180°C erwärmt wird.

12. Verfahren nach einem der Ansprüche 8 bis 11, **dadurch gekennzeichnet, dass** die Metallverbindung und die erste Säure in einer erwärmten Schmelzmischvorrichtung für Kunststoffe, wie z.B. einer Schneckenrühreinrichtung oder einer Mischeinrichtung, miteinander vermischt werden.

13. Verfahren nach einem der Ansprüche 8 bis 12, **dadurch gekennzeichnet, dass** das Molverhältnis zwischen dem Polyanilin oder einem Derivat desselben und der zweiten protonischen Säure 1:0,1 bis 1:1,1, vorzugsweise 1:0,5 bis 1:0,7 beträgt.

14. Verfahren nach einem der Ansprüche 8 bis 13, **dadurch gekennzeichnet, dass** die Mischung oder das Reaktionsprodukt des Polyanilins oder seines Derivats mit der zweiten protonischen Säure durch eine Wärmebehandlung der Mischung bei einer Temperatur von 40 bis 250°C, vorzugsweise 100 bis 200 °C, hergestellt wird.

15. Verfahren nach Anspruch 14, **dadurch gekennzeichnet, dass** die Mischung oder das Reaktionsprodukt des Polyanilins oder seines Derivats mit der zweiten protonischen Säure durch Vermischen in einer erwärmten Schmelzmischvorrichtung für Kunststoffe oder dergleichen, wie z.B. einer Schraubenrühreinrichtung, hergestellt wird.

16. Verfahren nach einem der Ansprüche 11 bis 15, **dadurch gekennzeichnet, dass** das Molverhältnis zwischen dem aus der Metallverbindung und der ersten Säure gebildeten Produkt und dem aus dem Polyanilin oder seinem Derivat und der zweiten protonischen Säure gebildeten Produkt 1:0,1 bis 1:1,4, vorzugsweise 1:0,5 bis 1:1 beträgt.

17. Verfahren nach einem der Ansprüche 8 bis 16, **dadurch gekennzeichnet, dass** das aus der Metallverbindung und der ersten Säure gebildeten Produkt bei einer Temperatur von 50 bis 200 °C, vorzugsweise 110 bis 150°C, mit der Mischung oder dem Reaktionsprodukt aus dem Polyanilin oder seinem Derivat und der zweiten protonischen Säure zusammengebracht wird.

18. Verfahren nach Anspruch 17, **dadurch gekennzeichnet, dass** das Zusammenbringen mittels einer Schmelzmischvorrichtung, wie z.B. einer Schneckenrühreinrichtung oder einer Mischeinrichtung erfolgt.

19. Verfahren nach einem der Ansprüche 8 bis 18, **dadurch gekennzeichnet, dass** es sich bei der ersten Säure um eine protonische Säure handelt.

20. Verfahren nach Anspruch 19, **dadurch gekennzeichnet, dass** die erste protonische Säure aus der folgenden Gruppe ausgewählt wird: Sulfonsäuren, Selensäuren, Phosphorsäuren, Borsäuren, Carbonsäuren, Hydrogensulfate, Hydrogenselenate und Hydrogenphosphate.

21. Verfahren nach Anspruch 20, **dadurch gekennzeichnet, dass** als erste protonische Säure eine Sulfonsäure, Phosphorsäure oder Carbonsäure ausgewählt wird.

22. Verfahren nach Anspruch 21, **dadurch gekennzeichnet, dass** als erste protonische Säure eine Sulfonsäure ausgewählt wird.

23. Verfahren nach Anspruch 22, **dadurch gekennzeichnet, dass** es sich bei der ersten protonischen Säure um Dodecylbenzolsulfonsäure handelt.

24. Verfahren nach einem der Ansprüche 8 und 23, **dadurch gekennzeichnet, dass** es sich bei der Metallverbindung um Zinkoxid und bei der ersten protonischen Säure um Dodecylbenzolsulfonsäure handelt, so dass sich als Reaktionsprodukt ein Kondensationsprodukt ergibt.

25. Verfahren nach Anspruch 24, **dadurch gekennzeichnet, dass** das Kondensationsprodukt einen Erweichungs- oder Schmelzpunkt von weniger als 300°C besitzt und während des Mischens und/oder Verarbeitens flüssig ist.

26. Verfahren nach einem der vorhergehenden Ansprüche, **dadurch gekennzeichnet, dass** die aus dem Polyanilin oder seinem Derivat, der Säure (den Säuren) und der Metallverbindung gebildete Mischung oder das Reaktionsprodukt zur Bildung einer leitenden Kunststoffmischung mit einem duroplastischen, thermoplastischen oder thermoelastischen Polymeren, insbesondere jedoch mit einem thermoplastischen Polymeren zusammengebracht wird.

27. Verfahren nach Anspruch 26, **dadurch gekennzeichnet, dass** der Anteil der Mischung oder des Reaktionsproduktes aus Polyanilin oder seinem Derivat, der Säure(n) und der Metallverbindung an der gesamten leitenden Kunststoffmischung 1 bis 25 Gew.-%, vorzugsweise 5 bis 15 Gew.-% beträgt.

28. Verfahren nach Anspruch 26 oder 27, **dadurch gekennzeichnet, dass** das Zusammenbringen bei einer Temperatur von 80 bis 300 °C, vorzugsweise bei einer Temperatur von etwa 130 bis 220°C erfolgt.

29. Verfahren nach einem der Ansprüche 26 bis 28, **dadurch gekennzeichnet, dass** das Zusammenbringen mittels einer Schmelzmischvorrichtung, wie z.B. einer Schraubenrühreinrichtung oder einer Mischeinrichtung erfolgt.

30. Verfahren nach einem der Ansprüche 26 bis 29, **dadurch gekennzeichnet, dass** es sich bei dem thermoplastischen Polymer um ein auf einem Olefin, wie z.B. Polyethylen oder Polypropylen, basierendes Homo-oder Copolymer, ein auf Styrol oder einem Derivat davon basierendes Homo-oder Copolymer, ein Vinylhomo- oder -copolymer oder einer Mischung daraus, ein Acrylhomo- oder -copolymer oder eine Mischung daraus oder ein thermoplastisches Kondensationspolymer handelt.

31. Schmelzverarbeitbares leitendes Polymer- oder Kunststoffmaterial mit einem Polyanilin oder einem Derivat davon, das mit einem protonischen Säuredotiermittel dotiert wurde, das folgende Formel aufweist:
A - R₁ (I)
wobei:
A eine Sulfonsäuregruppe ist
R₁ ein Alkyl oder Alkoxy mit 6-14 Kohlenstoffatomen oder ein Alkyl mit 6-12 Kohlenstoffatomen und mit einem oder mehreren Halogenen substituiert ist,
oder 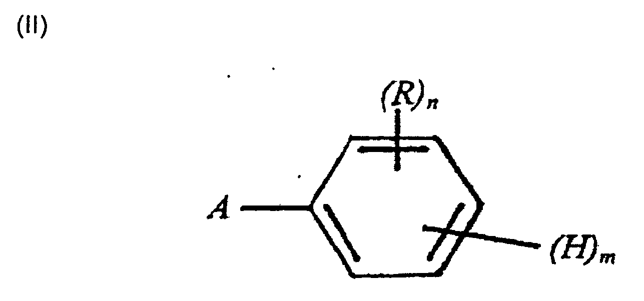
wobei:
A eine Sulfonsäuregruppe ist,
R ein Alkyl oder Alkoxy mit 4-12 Kohlenstoffatomen ist, oder ein Alkyl ist, das mit einem oder mehreren Halogenen substituiert wurde,
n 1 oder 2 ist, und
m eine Ganzzahl 3 oder 4 ist, allerdings unter der Voraussetzung, dass die Summe n + m gleich 5 ist,
**dadurch gekennzeichnet, dass** das Polyanilin oder sein Derivat, die mit dem protonischen Säuredotiermittel dotiert wurden, mit einer Metallverbindung behandelt wurden, die aus den Oxiden von Zn, Cu, Ca und Mg und ihrem Reaktionsprodukt mit einer Säure ausgewählt wird, welche das Material neutralisiert und seinen Perkolationsschwellenwert absenkt.

32. Polymer- oder Kunststoffmaterial nach Anspruch 31, **dadurch gekennzeichnet, dass** es sich bei dem protonischen Säuredotiermittel um Dodecylbenzolsulfonsäure handelt.

33. Polymer- oder Kunststoffmaterial nach Anspruch 31 oder 32, **dadurch gekennzeichnet, dass** es sich bei der Metallverbindung um ein Zinkoxid oder ein Derivat davon handelt.

34. Polymer- oder Kunststoffmaterial nach einem der Ansprüche 31 bis 33, **dadurch gekennzeichnet, dass** das Polyanilin oder sein Derivat und die protonische Säure vorzugsweise bei einer Temperatur von 100 bis 200°C thermisch behandelt werden, wobei sie vorzugsweise mittels einer Schmelzverarbeitungsvorrichtung vermischt werden.

35. Polymer- oder Kunststoffmaterial nach einem der Ansprüche 31 bis 34, **dadurch gekennzeichnet, dass** man die Metallverbindung zuerst mit der ersten Säure reagieren lässt, und dass das erhaltene Reaktionsprodukt anschließend mit der aus dem Polyanilin und dem zweiten protonischen Säuredotiermittel gebildeten Mischung oder dem Reaktionsprodukt zusammengebracht wird.

36. Polymer- oder Kunststoffmaterial nach einem der Ansprüche 31 bis 35, **dadurch gekennzeichnet, dass** es sich bei der ersten Säure um eine protonische Säure handelt, wobei vorzugsweise die gleiche Säure wie die zweite protonische Säure verwendet wird.

37. Polymer- oder Kunststoffmaterial nach Anspruch 35 oder 36, **dadurch gekennzeichnet, dass** das Produkt aus der Metallverbindung und der ersten Säure bei Temperaturen von weniger als 300 °C schmelzverarbeitbar ist.

38. Polymer- oder Kunststoffmaterial nach Anspruch 37, **dadurch gekennzeichnet, dass** es sich bei der Metallverbindung um Zinkoxid und bei der ersten Säure um Dodecylbenzolsulfonsäure handelt.

39. Polymer- oder Kunststoffmaterial nach einem der Ansprüche 31 bis 38, **dadurch gekennzeichnet, dass** es sich bei der zweiten protonischen Säure um Dodecylbenzolsulfonsäure handelt.

40. Polymer- oder Kunststoffmaterial nach einem der Ansprüche 31 bis 39, **dadurch gekennzeichnet, dass** das Molverhältnis zwischen der Metallverbindung und der ersten Säure 1:0,5 bis 1:2, vorzugsweise 1:1 bis 1:2 beträgt.

41. Polymer- oder Kunststoffmaterial nach einem der Ansprüche 31 bis 40, **dadurch gekennzeichnet, dass** das Molverhältnis zwischen dem aus der Metallverbindung und der ersten Säure gebildeten Produkt und dem aus dem Polyanilin oder einem Derivat desselben und der zweiten protonischen Säure gebildeten Reaktionsprodukt 1:0,1 bis 1:4, vorzugsweise 1:0,5 bis 1:1 beträgt.

42. Polymer- oder Kunststoffmaterial nach einem der Ansprüche 31 bis 41, **dadurch gekennzeichnet, dass** es ein duroplastisches, thermoplastisches oder thermoelastisches Polymer und insbesondere ein thermoplastisches Polymer umfasst.

43. Polymer- oder Kunststoffmaterial nach Anspruch 42, **dadurch gekennzeichnet, dass** es sich bei dem thermoplastischen Polymer um ein auf einem Olefin, wie z.B. Polyethylen oder Polypropylen, basierendes Homo-oder Copolymer, ein auf Styrol, einem Derivat davon oder einer Mischung daraus basierendes Homo- oder Copolymer, ein Vinylhomo- oder -copolymer oder eine Mischung daraus, ein Acrylhomo- oder -copolymer oder eine Mischung daraus oder ein thermoplastisches Kondensationspolymer handelt.

44. Polymer- oder Kunststoffmaterial nach Anspruch 42 oder 43, **dadurch gekennzeichnet, dass** der Anteil des Polyanilins oder eines Derivats desselben, der Säure(n) und der Metallverbindung an ihrer Gesamtmenge und dem thermoelastischen Polymer 0,5 bis 50 Gew.-%, vorzugsweise 5 bis 15 Gew.-% beträgt.

45. Polymer- oder Kunststoffmaterial nach einem der Ansprüche 31 bis 44, **dadurch gekennzeichnet, dass** die elektrische Leitfähigkeit bei einem Gewichtsanteil des protonierten Polyanilinpolymers von weniger als 0,05 zumindest 10⁻⁸ S/cm beträgt.

46. Polymer- oder Kunststoffmaterial nach Anspruch 45, **dadurch gekennzeichnet, dass** die elektrische Leitfähigkeit bei einem Gewichtsanteil des protonierten Polyanilinpolymers von weniger als 0,02 zumindest 10⁻⁸ S/cm beträgt.

47. Polymer- oder Kunststoffmaterial nach Anspruch 46, **dadurch gekennzeichnet, dass** die elektrische Leitfähigkeit bei einem Gewichtsanteil des protonierten Polyanilinpolymers von weniger als 0,01 zumindest 10⁻⁸ S/cm beträgt.

48. Verwendung einer Metallverbindung, die aus den Oxiden von Zn, Cu, Ca und Mg ausgewählt wird, oder des Reaktionsproduktes einer solchen Metallverbindung mit einer Säure zum
(a) Neutralisieren,
(b) Plastifizieren
(c) Absenken des Perkulationsschwellenwertes und/oder
(d) Stabilisieren
eines Polyanilins oder eines Derivats davon, die mit einem protonischen Säuredotiermittel folgender Formel dotiert wurden:
A- R₁ (I)
wobei:
A eine Sulfonsäuregruppe ist,
R¹ ein Alkyl oder Alkoxy mit 6-14 Kohlenstoffatomen ist, oder ein Alkyl mit 6-12 Kohlenstoffatomen ist, das mit einem oder mehreren Halogenen substituiert wurde,
oder 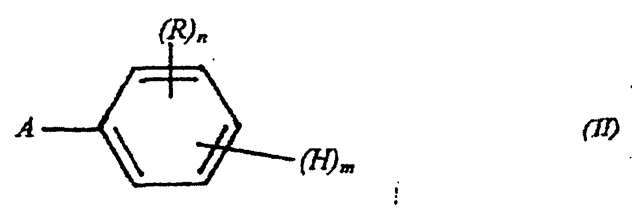
wobei:
A eine Sulfonsäuregruppe ist,
R ein Alkyl oder Alkoxy mit 4-12 Kohlenstoffatomen ist, oder ein Alkyl ist, das mit einem oder mehreren Halogenen substituiert wurde,
n 1 oder 2 ist, und
m eine Ganzzahl 3 oder 4 ist, allerdings unter der Voraussetzung, dass die Summe n + m gleich 5 ist.

49. Verwendung einer Metallverbindung nach Anspruch 48, **dadurch gekennzeichnet, dass** es sich bei der Metallverbindung um Zinkoxid und bei der Säure um eine Sulfonsäure, vorzugsweise Dodecylbenzolsulfonsäure handelt.

50. Polymer- oder Kunststoffmaterial nach einem der Ansprüche 36 bis 49, **dadurch gekennzeichnet, dass** die elektrische Leitfähigkeit bei einem Gewichtsanteil des protonierten Polyanilinpolymers von weniger als etwa 0,05 zumindest 10⁻⁸ S/cm beträgt.

51. Polymer- oder Kunststoffmaterial nach Anspruch 50, **dadurch gekennzeichnet, dass** die elektrische Leitfähigkeit bei einem Gewichtsanteil des protonierten Polyanilinpolymers von weniger als etwa 0,02 zumindest etwa 10⁻⁸ S/cm beträgt.

52. Polymer- oder Kunststoffmaterial nach Anspruch 51, **dadurch gekennzeichnet, dass** die elektrische Leitfähigkeit bei einem Gewichtsanteil des protonierten Polyanilinpolymers von weniger als etwa 0,01 zumindest etwa 10⁻⁸ S/cm beträgt.

53. Verwendung einer Metallverbindung oder des Reaktionsproduktes aus einer Metallverbindung mit einer Säure zum
a) Neutralisieren,
b) Plastifizieren,
c) Absenken des Perkulationsschwellenwertes und/oder
d) Stabilisieren
eines Polyanilins oder eines Derivats davon, die mit einem protonischen Säuredotiermittel dotiert wurden, die mit einem protonischen Säuredotiermittel folgender Formel dotiert wurden:
A- R₁ (I)
wobei:
A eine Sulfonsäuregruppe ist,
R¹ ein Alkyl oder Alkoxy mit 6-14 Kohlenstoffatomen ist, oder ein Alkyl mit 6-12 Kohlenstoffatomen ist, das mit einem oder mehreren Halogenen substituiert wurde,
oder 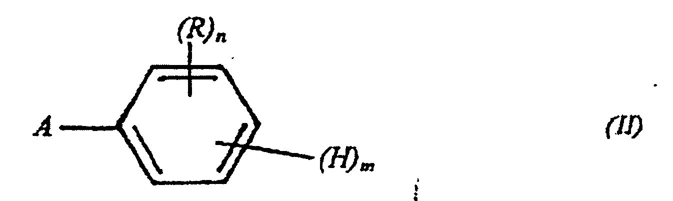
wobei:
A eine Sulfonsäuregruppe ist,
R ein Alkyl oder Alkoxy mit 4-12 Kohlenstoffatomen ist, oder ein Alkyl ist, das mit einem oder mehreren Halogenen substituiert wurde,
n 1 oder 2 ist, und
m eine Ganzzahl 3 oder 4 ist, allerdings unter der Voraussetzung, dass die Summe n + m gleich 5 ist.

54. Verwendung nach Anspruch 53, **dadurch gekennzeichnet, dass** es sich bei der Metallverbindung um Zinkoxid und bei der Säure um eine Sulfonsäure, vorzugsweise Dodecylbenzolsulfonsäure handelt.

55. Verfahren zur Neutraüsierung saurer Polyanilinverbindungen, **dadurch gekennzeichnet, dass** eine saure Mischung aus Polyanilin mit einem Neutralisierungsmittel in Kontakt gebracht wird, das eine Metallverbindung umfasst.

56. Verfahren nach Anspruch 55, **dadurch gekennzeichnet, dass** das Metall der Metallverbindung aus der aus Zn, Cu, Ca und Mg bestehenden Gruppe ausgewählt wird, wobei vorzugsweise Zn verwendet wird.

57. Verfahren nach Anspruch 56, **dadurch gekennzeichnet, dass** es sich bei der Metallverbindung um ZnO handelt.

## Revendications

1. Procédé de préparation d'un matériau conducteur en matières plastiques ou polymères, en mettant en contact :
(a) une polyaniline ou un dérivé de celle-ci et
(b) un dopant d'acide protique ayant la formule :
A - R₁ (I)
où
A est un groupement d'acide sulfonique
R₁ est un alkyle ou un alkoxy contenant entre 6 et 14 atomes de carbone ou un alkyle contenant entre 6 et 12 atomes de carbone avec substitution par un ou plusieurs halogènes,
ou 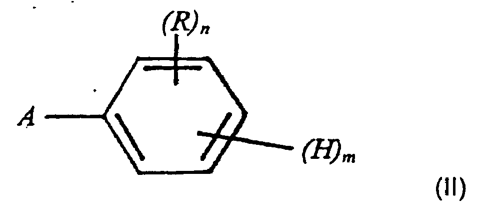
où
A est un groupement d'acide sulfonique
R est un alkyle ou un alkoxy contenant entre 4 et 12 atomes de carbone ou un alkyle avec substitution par un ou plusieurs halogénures, n est égal à 1 ou 2, et
m est le nombre entier 3 ou 4, tel que la somme n + m est égale à 5,
**caractérisé en ce que**, pendant la mise en contact ou après celle-ci,
(c) un composé métallique est ajouté, qui est sélectionné parmi les oxydes de Zn, Cu, Ca et Mg, qui neutralise ledit matériau et abaisse son seuil de percolation.

2. Procédé selon la revendication 1, **caractérisé en ce que** le composé métallique est ZnO.

3. Procédé selon la revendication 1 ou 2, **caractérisé en ce que** le dopant à l'acide protique est de l'acide dodécylbenzènesulfonique.

4. Procédé selon la revendication 1 ou 2, **caractérisé en ce qu'**un mélange contenant de la polyaniline ou un dérivé de celle-ci et un acide protique est chauffé jusqu'à une température de 100°C à 200°C et mélangé, de préférence à l'aide d'un dispositif de mélange par fusion.

5. Procédé selon l'une quelconque des revendications précédentes, **caractérisé en ce que** de la polyaniline non substituée, qui est de préférence sous la forme d'une base d'éméraldine, est mise en contact avec un acide protique.

6. Procédé selon l'une quelconque des revendications précédentes, **caractérisé en ce que** le rapport molaire entre le composé métallique et l'acide protique est situé entre 1:0,1 et 1:1,1, de préférence entre 1:0,5 et 1:0,7.

7. Procédé selon l'un quelconque des revendications précédentes, **caractérisé en ce que** le rapport molaire entre la polyaniline ou le dérivé de celle-ci et l'acide protique est situé entre 1:0,1 et 1:1,1, de préférence entre 1:0,5 et 1:0,7.

8. Procédé selon l'un quelconque des revendications précédentes, **caractérisé en ce que** le composé métallique est tout d'abord mis à réagir avec un premier acide, après quoi le produit obtenu est mis ensemble avec un produit de réaction ou de mélange constitué de la polyaniline et d'un second acide protique, qui est ledit dopant à l'acide protique.

9. Procédé selon la revendication 8, **caractérisé en ce que** le rapport molaire entre le composé métallique et la quantité totale d'acide (le premier acide plus le second acide protique) est situé entre 1:1 et 1:4, de préférence entre 1:2,2 et 1:2,7.

10. Procédé selon la revendication 8 ou 9, **caractérisé en ce que** le rapport molaire entre le composé métallique et le premier acide est situé entre 1:0,5 et 1:2, de préférence entre 1:1 et 1:2.

11. Procédé selon la revendication 8, 9 ou 10, **caractérisé en ce que** le composé métallique et le premier acide sont mis à réagir l'un avec l'autre en chauffant leur mélange jusqu'à une température située entre 50 et 200°C, de préférence jusqu'à une température située entre 130 et 180°C.

12. Procédé selon l'une quelconque des revendications 8 à 11, **caractérisé en ce que** le composé métallique et le premier acide sont mélangés l'un avec l'autre dans un dispositif chauffé de mélange par fusion destiné à des matières plastiques, tel qu'un mélangeur à vis ou un dispositif de combinaison.

13. Procédé selon l'une quelconque des revendications 8 à 12, **caractérisé en ce que** le rapport molaire entre la polyaniline ou un dérivé de celle-ci et le second acide protique est situé entre 1:0,1 et 1:1,1, de préférence entre 1:0,5 et 1:0,7.

14. Procédé selon l'une quelconque des revendications 8 à 13, **caractérisé en ce que** le produit de réaction ou de mélange constitué de polyaniline ou du dérivé de celle-ci et du second acide protique est préparé par le traitement thermique de leur mélange à une température située entre +40 et +250°C, de préférence à une température située entre 100 et 200°C.

15. Procédé selon la revendication 14, **caractérisé en ce que** le produit de réaction ou de mélange constitué de polyaniline ou de son dérivé et du second acide protique est produit en les mélangeant l'un avec l'autre dans un dispositif chauffé de mélange par fusion destiné à des matières plastiques, ou analogue, tel qu'un mélangeur à vis.

16. Procédé selon l'une quelconque des revendications 11 à 15, **caractérisé en ce que** le rapport molaire entre le produit constitué du composé métallique et du premier acide et le produit constitué de la polyaniline ou de son dérivé et du second acide protique est situé entre 1:0,1 et 1:4, de préférence entre 1:0,5 et 1:1.

17. Procédé selon l'une quelconque des revendications 8 à 16, **caractérisé en ce que** le produit constitué du composé métallique et du premier acide est mis en commun avec le produit de réaction ou de mélange constitué de la polyaniline ou de son dérivé et du second acide protique à une température située entre 50 et 200°C, de préférence à une température située entre 110 et 150°C.

18. Procédé selon la revendication 17, **caractérisé en ce que** ladite mise en commun est effectuée à l'aide d'un dispositif de mélange par fusion tel qu'un mélangeur à vis ou un dispositif de combinaison.

19. Procédé selon l'une quelconque des revendications 8 à 18, **caractérisé en ce que** le premier acide est un acide protique.

20. Procédé selon la revendication 19, **caractérisé en ce que** le premier acide protique est sélectionné parmi des acides sulfoniques, des acides séléniques, des acides phosphoriques, des acides boriques et des acides carboxyliques, et des sulfates d'hydrogène, des sélénates d'hydrogène, et des phosphates d'hydrogène.

21. Procédé selon la revendication 20, **caractérisé en ce que** le premier acide protique est sélectionné parmi des acides sulfoniques, des acides phosphoriques ou des acides carboxyliques.

22. Procédé selon la revendication 21, **caractérisé en ce que** le premier acide protique est sélectionné parmi des acides sulfoniques.

23. Procédé selon la revendication 22, **caractérisé en ce que** le premier acide protique est l'acide dodécylbenzènesulfonique.

24. Procédé selon les revendications 8 et 23, **caractérisé en ce que** le composé métallique est un oxyde de zinc et le premier acide protique est l'acide dodécylbenzènesulfonique, de sorte que le produit obtenu est un produit de condensation.

25. Procédé selon la revendication 24, **caractérisé en ce que** le produit de condensation a un point de ramollissement ou de fusion inférieur à 300°C et est fluide pendant le mélange et/ou le traitement.

26. Procédé selon l'une quelconque des revendications pr6c6dentes, **caractérisé en ce que** le produit de réaction ou de mélange constitué de la polyaniline ou de son dérivé, du ou des acides et du composé métallique est mis en commun avec un polymère thermodurci, thermoplastique ou thermoélastique, de préférence un polymère thermoplastique, pour former un mélange conducteur de matières plastiques.

27. Procédé selon la revendication 26, **caractérisé en ce que** le pourcentage du produit de réaction ou de mélange constitué de la polyaniline ou de son dérivé, du ou des acides et du composé métallique dans l'ensemble du mélange conducteur de matières plastiques est situé entre 1 et 25 % en poids, de préférence entre 5 et 15 % en poids.

28. Procédé selon la revendication 26 ou 27, **caractérisé en ce que** la mise en commun est effectuée à une température située entre 80 et 300°C, de préférence à une température située entre environ 130 et 200°C.

29. Procédé selon la revendication 26, 27 ou 28, **caractérisé en ce que** ladite mise en commun est effectuée à l'aide d'un dispositif de mélange par fusion tel qu'un mélangeur à vis ou un dispositif de combinaison.

30. Procédé selon l'une quelconque des revendications 26 à 29, **caractérisé en ce que** le polymère thermoplastique est un homo- ou copolymère à base d'oléfine tel qu'un polyéthylène ou un polypropylène, un homo- ou copolymère à base de styrène ou d'un dérivé de celui-ci, un homopolymère ou un copolymère vinylique ou un mélange de ceux-ci, un homopolymère ou un copolymère acrylique ou un mélange de ceux-ci, ou un polymère de condensation thermoplastique.

31. Matériau conducteur en matières plastiques ou polymères, pouvant titre traité par fusion, contenant une polyaniline ou un dérivé de celle-ci, qui ont été dopés avec un dopant d'acide protique ayant la formule :
A - R₁ (I)
où
A est un groupement d'acide sulfonique
R₁ est un alkyle ou un alkoxy contenant entre 6 et 14 atomes de carbone ou un alkyle contenant entre 6 et 12 atomes de carbone avec substitution par un ou plusieurs halogènes,
ou 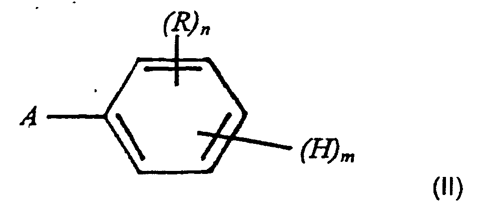
où
A est un groupement d'acide sulfonique
R est un alkyle ou un alkoxy contenant entre 4 et 12 atomes de carbone ou un alkyle avec substitution par un ou plusieurs halogènes,
n est égal à 1 ou 2, et
m est le nombre entier 3 ou 4, tel que la somme n + m est égale à 5,
**caractérisé en ce que** la polyaniline ou son dérivé, qui ont été dopés avec le dopant à l'acide protique ont été traités avec un composé métallique, qui est sélectionné parmi les oxydes de Zn, Cu, Ca et Mg et leur produit de réaction avec un acide, qui neutralise ledit matériau et abaisse son seuil de percolation.

32. Matériau en matières plastiques ou polymères selon la revendication 31, **caractérisé en ce que** le dopant à l'acide protique est l'acide dodécylbenzènesulfonique.

33. Matériau en matières plastiques ou polymères selon la revendication 31 ou 32, **caractérisé en ce que** le composé métallique est un oxyde de zinc ou un dérivé de celui-ci.

34. Matériau en matières plastiques ou polymères selon la revendication 31, 32 ou 33, **caractérisé en ce que** la polyaniline ou son dérivé et l'acide protique sont traités thermiquement, de préférence entre 100 et 200°C et de préférence par un mélange à l'aide d'un dispositif de traitement par fusion.

35. Matériau en matières plastiques ou polymères selon l'une quelconque des revendications 31 à 34, **caractérisé en ce que** le composé métallique a tout d'abord été mis à réagir avec le premier acide, après quoi le produit obtenu a été mis en commun avec le produit de réaction ou de mélange constitué de la polyaniline et du second acide protique servant de dopant.

36. Matériau en matières plastiques ou polymères selon l'une quelconque des revendications 31 à 35, **caractérisé en ce que** le premier acide est également un acide protique, de préférence le même que le second acide protique.

37. Matériau en matières plastiques ou polymères selon l'une quelconque des revendications 35 ou 36, **caractérisé en ce que** le produit constitué du composé métallique et du premier acide est un produit qui peut être traité par fusion à une température inférieure à 300°C.

38. Matériau en matières plastiques ou polymères selon la revendication 37, **caractérisé en ce que** le composé métallique est de 1'oxyde de zinc et le premier acide est l'acide dodécylbenzènesulfonique.

39. Matériau en matières plastiques ou polymères selon l'une quelconque des revendications 31 à 38, **caractérisé en ce que** le second acide protique est l'acide dodécylbenzènesulfonique.

40. Matériau en matières plastiques ou polymères selon l'une quelconque des revendications 31 à 39, **caractérisé en ce que** le rapport molaire entre le composé métallique et le premier acide est situé entre 1:0,5 et 1:2, de préférence entre 1:1 et 1:2.

41. Matériau en matières plastiques ou polymères selon l'une quelconque des revendications 31 à 40, **caractérisé en ce que** le rapport molaire entre le produit constitué du composé métallique et du premier acide et le produit de réaction constitué de polyaniline ou d'un dérivé de celle-ci et du second acide protique est situé entre 1:0,1 et 1:4, de préférence entre 1:0,5 et 1:1.

42. Matériau en matières plastiques ou polymères selon l'une quelconque des revendications 31 à 41, **caractérisé en ce qu'**il comporte un polymère thermodurci, thermoplastique ou thermoélastique, de préférence un polymère thermoplastique.

43. Matériau en matières plastiques ou polymères selon la revendication 42, **caractérisé en ce que** le polymère thermoplastique est un homo- ou copolymère à base d'oléfine tel qu'un polyéthylène ou un polypropylène, un homo- ou copolymère à base de styrène ou d'un dérivé de celui-ci ou un mélange de ceux-ci, un homopolymère ou un copolymère vinylique ou un mélange de ceux-ci, un homopolymère ou un copolymère acrylique ou un mélange de ceux-ci, ou un polymère de condensation thermoplastique.

44. Matériau en matières plastiques ou polymères selon la revendication 42 ou 43, **caractérisé en ce que** le pourcentage de la polyaniline ou un dérivé de celle-ci, du ou des acides et du composé métallique dans la quantité totale de ceux-ci et du polymère thermoplastique est situé entre 0,5 et 50 % en poids, de préférence entre 5 et 15 % en poids.

45. Matériau en matières plastiques ou polymères selon l'une quelconque des revendications 31 à 44, **caractérisé en ce que** la conductivité électrique est d'au moins 10⁻⁸ S/cm à une fraction pondérale dudit polymère de polyaniline protoné inférieure à 0,05.

46. Matériau en matières plastiques ou polymères selon la revendication 45, **caractérisé en ce que** la conductivité électrique est d'au moins 10⁻⁸ S/cm à une fraction pondérale dudit polymère de polyaniline protoné inférieure à 0,02.

47. Matériau en matières plastiques ou polymère selon la revendication 46, **caractérisé en ce que** la conductivité électrique est d'au moins 10⁻⁸ S/cm à fraction pondérale dudit polymère de polyaniline protoné inférieure à 0,01.

48. Utilisation d'un composé métallique qui est sélectionné parmi les oxydes de Zn, Cu, Ca, et Mg ou du produit de réaction d'un tel composé métallique et d'un acide, destinée à :
a) neutraliser,
b) plastifier,
c) abaisser le seuil de percolation et/ou
d) stabiliser
une polyaniline ou un dérivé de celle-ci, qui a été dopée en dopant à l'acide protique ayant la formule :
A - R₁ (I)
où
A est un groupement d'acide sulfonique
R₁ est un alkyle ou un alkoxy contenant entre 6 et 14 atomes de carbone ou un alkyle contenant entre 6 et 12 atomes de carbone avec substitution par un ou plusieurs halogènes,
ou 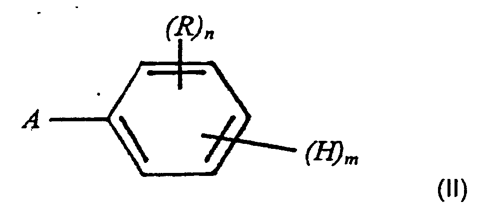
où
A est un groupement d'acide sulfonique
R est un alkyle ou un alkoxy contenant entre 4 et 12 atomes de carbone ou un alkyle avec substitution par un ou plusieurs halogènes,
n est égal à 1 ou 2, et
m est le nombre entier 3 ou 4, tel que la somme n + m est égale à 5.

49. Utilisation selon la revendication 48, **caractérisée en ce que** le composé métallique est un oxyde de zinc et l'acide est un acide sulfonique, de préférence l'acide dodécylbenzènesulfonique.

50. Matériau en matières plastiques ou polymères selon l'une quelconque des revendications 36 à 49, **caractérisé en ce que** la conductivité électrique est d'environ au moins 10⁻⁸ S/cm à une fraction pondérale dudit polymère de polyaniline protoné inférieure à environ 0,05.

51. Matériau en matières plastiques ou polymères selon la revendication 50, **caractérisé en ce que** la conductivité électrique est d'environ au moins 10⁻⁸ S/cm à une fraction pondérale dudit polymère de polyaniline protoné inférieure à environ 0,02.

52. Matériau en matières plastiques ou polymères selon la revendication 51, **caractérisé en ce que** la conductivité électrique est d'environ au moins 10⁻⁸ S/cm à une fraction pondérale dudit polymère de polyaniline protoné inférieure à environ 0,01.

53. Utilisation d'un composé métallique ou du produit de réaction d'un composé métallique et d'un acide, destinée à :
a) neutraliser,
b) plastifier,
c) abaisser le seuil de percolation et/ou
d) stabiliser
une polyaniline ou un dérivé de celle-ci, qui a été dopée en dopant à l'acide protique ayant la formule :
A - R₁ (I)
où
A est un groupement d'acide sulfonique
R₁ est un alkyle ou un alkoxy contenant entre 6 et 14 atomes de carbone ou un alkyle contenant entre 6 et 12 atomes de carbone avec substitution par un ou plusieurs halogènes,
ou 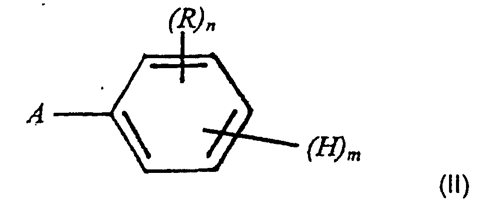
où
A est un groupement d'acide sulfonique
R est un alkyle ou un alkoxy contenant entre 4 et 12 atomes de carbone ou un alkyle avec substitution par un ou plusieurs halogènes,
n est égal à 1 ou 2, et
m est le nombre entier 3 ou 4, tel que la somme n + m est égale à 5.

54. Utilisation selon la revendication 53, **caractérisé en ce que** le composé métallique est un oxyde de zinc et l'acide est un acide sulfonique, de préférence l'acide dodécylbenzènesulfonique.

55. Procédé de neutralisation de compositions de polyaniline acides, **caractérisé en ce qu'**un mélange acide de polyaniline est mis en contact avec un agent neutralisant comportant un composé métallique.

56. Procédé selon la revendication 55, **caractérisé en ce que** le métal du composé métallique est sélectionné parmi le groupe constitué de Zn, Cu, Ca et Mg, de préférence Zn.

57. Procédé selon la revendication 56, **caractérisé en ce que** le composé métallique est ZnO.
